# EUROPEAN PATENT APPLICATION

(11) **EP 4 834 958 A1**
(43) Date of publication of application: **04.11.2026**
(21) Application number: 24913047.7
(22) Date of filing: 26.12.2024
(51) Int. Cl.: C08F 214/18

(54) **FLUORINE-CONTAINING POLYMER, METHOD FOR PRODUCING FLUORINE-CONTAINING POLYMER, AND SHEET**

(30) Priority: 28.12.2023 JP 2023222267
(71) Applicant: AGC Inc., Chiyoda-ku Tokyo 100-8405 (JP)
(72) Inventor: TAMURA, Tasuku, Tokyo 100-8405 (JP); YANAGIYA, Aoi, Tokyo 100-8405 (JP); KAWAI, Tsuyoshi, Tokyo 100-8405 (JP); TAGUCHI, Daisuke, Tokyo 100-8405 (JP); TOYODA, Mizuna, Tokyo 100-8405 (JP); YONEDA, Toshikazu, Tokyo 100-8405 (JP)
(74) Representative: Müller-Boré & Partner Patentanwälte PartG mbB
(86) International application number: PCT/JP2024/046256
(87) International publication number: WO 2025/143161

(57) **Abstract**

The object of the present invention is to provide a fluorinated polymer having a high decomposition temperature and being excellent in the roll windability, and to provide a method for producing a fluorinated polymer having a high decomposition temperature and being excellent in the roll windability. Another object of the present invention is to provide a sheet comprising the fluorinated polymer. The fluorinated polymer of the present invention satisfies requirement 1 and requirement 2. Requirement 1: the 2% weight loss temperature of the fluorinated polymer is 300°C or higher and less than 420°C. Requirement 2: the difference between the 5% weight loss temperature of the fluorinated polymer and the 2% weight loss temperature of the fluorinated polymer is 20°C or more.

## Description

### TECHNICAL FIELD

The present invention relates to a fluorinated polymer, a method for producing a fluorinated polymer, and a sheet.

### BACKGROUND ART

Crosslinked rubber articles, obtained by crosslinking a composition containing a fluorinated polymer, which are excellent in heat resistance, chemical resistance, flame retardancy, weather resistance, etc., are used in various industrial fields.

Patent Document 1 discloses a fluorinated polymer that has an iodine atom, that has units a which are units based on tetrafluoroethylene, units b which are units based on a monomer having one polymerizable unsaturated bond (excluding tetrafluoroethylene) and units c which are units based on a fluorinated monomer having two or more polymerizable unsaturated bonds, and that has a metal content within a predetermined range (see Claim 1).

Patent Document 1 also discloses a method for producing a fluorinate polymer, which comprises emulsion-polymerizing tetrafluoroethylene, a monomer having one polymerizable unsaturated bond (excluding tetrafluoroethylene) and a fluorinated monomer having two or more polymerizable unsaturated bonds, in the presence of a radical polymerization initiator and a predetermined iodine-containing compound, to obtain a latex containing a fluorinated elastic copolymer, and agglomerating the fluorinated copolymer in the latex with an acid containing no metal element (see Claim 8).

### PRIOR ART DOCUMENTS

### PATENT DOCUMENTS

Patent Document 1: Japanese Patent No. 7140118

### DISCLOSURE OF INVENTION

### TECHNICAL PROBLEM

Compositions containing a fluorinated polymer are required to have further improved performance.

In view of production efficiency in production of crosslinked rubber articles, etc., using a fluorinated polymer, a fluorinated polymer has been required which is excellent in processability, particularly in such a property that when the fluorinated polymer or a material containing the fluorinated polymer is kneaded by using a roll kneading machine, it is well wound onto the roll (hereinafter this property will also be referred to as "roll windability").

On the other hand, it was found by the present inventors that a fluorinated polymer excellent in the roll windability tends to have a low decomposition temperature. If a fluorinated polymer has a low decomposition temperature, the resulting crosslinked rubber has low plasma resistance. Thus, a fluorinated polymer having a high decomposition temperature has also been required.

That is, a fluorinated polymer having a high decomposition temperature and being excellent in the roll windability has been required.

To meet such a requirement, the present inventors have conducted studies on a fluorinated polymer and its production method with reference to Patent Document 1 and as a result found that there is room for improvement in the balance between the decomposition temperature and the roll windability.

Under these circumstances, the present invention has been made to solve the above problems, and the object of the present invention is to provide a fluorinated polymer having a high decomposition temperature and being excellent in the roll windability, and a method for producing a fluorinated polymer having a high decomposition temperature and being excellent in the roll windability. Another object of the present invention is to provide a sheet containing the fluorinated polymer.

### SOLUTION TO PROBLEM

The present inventors have conducted extensive studies on the above objects and as a result found that a fluorinated polymer has a high decomposition temperature and has improved roll windability when the 2% weight loss temperature and the 5% weight loss temperature obtained by thermogravimetric analysis of the fluorinated polymer are within predetermined ranges, and accomplished the present invention.

The present inventors have further conducted extensive studies on the above objects and as a result found that by a method for producing a fluorinated polymer, which comprises polymerizing monomers in an aqueous dispersion that contains substantially no emulsifier and that contains a fluorinated polymer having a predetermined composition, and conducing a predetermined stirring treatment, a fluorinated polymer having a high decomposition temperature and being excellent in the roll windability can be produced, and accomplished the present invention.

That is, the present inventors have found that the above objects can be achieved by the following configurations.
[1] A fluorinated polymer, which satisfies requirement 1 and requirement 2 to be described later.
[2] The fluorinated polymer according to [1], which has units based on tetrafluoroethylene and units based on a perfluoro(alkyl vinyl ether).
[3] The fluorinated polymer according to [1] or [2], wherein the storage elastic modulus G' at 100°C at a frequency of 50 cpm is 300 kPa or more.
[4] The fluorinated polymer according to any one of [1] to [3], wherein in a thermogravimetric curve obtained by thermogravimetric analysis of the fluorinated polymer, an inflection point appears in a temperature range lower than the 5% weight loss temperature.
[5] The fluorinated polymer according to [2], wherein the content of the units based on the tetrafluoroethylene is 20 to 80 mol% to the total content of all units of the fluorinated polymer, and
   the content of the units based on the perfluoro(alkyl vinyl ether) is 20 to 80 mol% to the total content of all units of the fluorinated polymer.
[6] The fluorinated polymer according to any one of [1] to [5], wherein the fluorinated polymer contains at least one member selected from the group consisting of a polymerizable unsaturated bond, a chlorine atom, a bromine atom, an iodine atom and a nitrile group.
[7] A method for producing a fluorinated polymer, which comprises polymerizing monomers containing tetrafluoroethylene and a perfluoro(alkyl vinyl ether) in an aqueous dispersion that contains substantially no water-soluble emulsifier, that contains a first fluorinated polymer containing units based on tetrafluoroethylene and units based on a perfluoro(alkyl vinyl ether), and that contains an aqueous medium, to produce a second fluorinated polymer having units based on the tetrafluoroethylene and units based on the perfluoro(alkyl vinyl ether); wherein
   in the first fluorinated polymer, the content of the units based on the perfluoro(alkyl vinyl ether) is 20 to 80 mol% to the total contents of the units based on the tetrafluoroethylene and the units based on the perfluoro(alkyl vinyl ether),
   in the second fluorinated polymer, the content of the units based on the perfluoro(alkyl vinyl ether) is 20 to 80 mol% to the total contents of the units based on the tetrafluoroethylene and the units based on the perfluoro(alkyl vinyl ether);
   before the start of the polymerization of the monomers, the content of the first fluorinated polymer is 0.01 to 4.0 mass% to the total mass of the aqueous dispersion; and
   after the polymerization of the monomers in the aqueous dispersion, the aqueous dispersion is stirred by a stirring apparatus configured to rotate a stirring shaft provided with an impeller at a number of revolutions of 1000 rpm or more, to agglomerate the second fluorinated polymer and the agglomerated second fluorinated polymer is recovered.
[8] The method for producing the fluorinated polymer according to [7], wherein the recovered second fluorinated polymer is washed with ultrapure water.
[9] A sheet, which comprises the fluorinated polymer as defined in any one of [1] to [6] or the fluorinated polymer produced by the production method as defined in [7] or [8].

### ADVANTAGEOUS EFFECTS OF INVENTION

According to the present invention, it is possible to provide a fluorinated polymer having a high decomposition temperature and being excellent in the roll windability, and a method for producing a fluorinated polymer having a high decomposition temperature and being excellent in the roll windability. According to the present invention, it is also possible to provide a sheet containing the fluorinated polymer.

### DESCRIPTION OF EMBODIMENTS

Meanings of terms used in this specification are as follows.

In this specification, " to " used to show a range of numerical values is used to include numerical values before and after it as the lower limit value and the upper limit value.

In numerical ranges described stepwise in this specification, the upper limit value or the lower limit value described in a certain numerical range may be replaced with an upper limit value or a lower limit value of another numerical range described stepwise. In numerical ranges described in this specification, the upper limit value or the lower limit value described in a certain numerical range may be replaced with values indicated in Examples.

In this specification, as each component, a single type of a substance corresponding to the component may be used alone, or two or more types may be used in combination. In a case where two or more types are used in combination for each component, the content of the component means the total content of the substances used in combination, unless otherwise specified.

In this specification, a combination of two or more preferred embodiments corresponds to a more preferred embodiment.

"Units" generically mean an atomic group derived from one molecule of a monomer, directly formed by polymerization of the monomer, and an atomic group obtained by chemical conversion of a part of the atomic group. "Units based on a monomer" may sometimes be referred to simply as "units".

The content (mass% or mol%) of each units to all units of a polymer is obtained by analyzing the polymer by solid-state nuclear magnetic resonance spectroscopy (NMR). Usually, the content of each units calculated from the amount of charge of each monomer substantially agrees with the actual content of each units.

According to a first embodiment of the present invention, provided is a fluorinated polymer, which satisfies requirement 1 and requirement 2:
requirement 1: the 2% weight loss temperature of the fluorinated polymer is 300°C or higher and less than 420°C;
requirement 2: the difference between the 5% weight loss temperature of the fluorinated polymer and the 2% weight loss temperature of the fluorinated polymer (hereinafter also referred to as "ΔTd") is 20°C or more.

According to a second embodiment of the present invention, provided is a method for producing a fluorinated polymer, which comprises polymerizing monomers containing tetrafluoroethylene and a perfluoro(alkyl vinyl ether) in an aqueous dispersion that contains substantially no water-soluble emulsifier, that contains a first fluorinated polymer containing units based on tetrafluoroethylene and units based on a perfluoro(alkyl vinyl ether), and that contains an aqueous medium, to produce a fluorinated polymer; wherein
in the first fluorinated polymer, the content of the units based on the perfluoro(alkyl vinyl ether) is 20 to 80 mol% to the total content of the units based on the tetrafluoroethylene and the units based on the perfluoro(alkyl vinyl ether),
in the fluorinated polymer, the content of the units based on the perfluoro(alkyl vinyl ether) is 20 to 80 mol% to the total contents of the units based on the tetrafluoroethylene and the units based on the perfluoro(alkyl vinyl ether);
before the start of the polymerization of the monomers, the content of the first fluorinated polymer is 0.01 to 4.0 mass% to the total mass of the aqueous dispersion; and
after the polymerization of the monomers in the aqueous dispersion, the aqueous dispersion is stirred by a disc turbine impeller at a number of revolutions of 1000 rpm or more to agglomerate the fluorinated polymer and the agglomerated fluorinated polymer is recovered.

### [First embodiment]

Now, the fluorinated polymer according to the first embodiment of the present invention will be described.

Of the fluorinated polymer according to the present embodiment (hereinafter also referred to as "the present polymer"), the 2% weight loss temperature is 300°C or higher and lower than 420°C (requirement 1). The difference ΔTd between the 5% weight loss temperature and the 2% weight loss temperature of the present polymer is 20°C or more (requirement 2)

The fluorinated polymer according the present embodiment has a high decomposition temperature and is excellent in the roll windability. The mechanism how the above properties improve when the fluorinated polymer satisfies both requirements 1 and 2 has not been clearly understood yet, but is estimated to be as follows. That is, requirement 1 being satisfied means that the fluorinated polymer contains a low molecular weight component to a certain extent. Presence of a low molecular weight component makes the fluorinated polymer be more plasticized and have a lower viscosity, and as a result makes the fluorinated polymer have improved roll windability. The requirement 2 being satisfied means that the fluorinated polymer has a high molecular weight component, and due to the presence of a high molecular weight component, the fluorinated polymer has a high decomposition temperature.

In this specification, the "2% weight loss temperature" and the "5% weight loss temperature" are measured by thermogravimetric analysis of the fluorinated polymer to be measured. Specifically, while a sample of the fluorinated polymer, without heat history to a temperature of 100°C or higher, is heated in an air atmosphere from 30°C to 550°C at a heating rate of 10°C/min, the weigh change of the sample is measured to conduct the thermogravimetric analysis. As a result of the thermogravimetric analysis, the temperature at which the mass of the sample becomes 98 mass% of the mass of the sample before heating, corresponds to the 2% mass reduction temperature, and the temperature at which the mass of the sample becomes 95 mass% of the mass of the sample before heating, corresponds to the 5% mass reduction temperature. Δ Td of requirement 2 is calculated from the 5% weight loss temperature and the 2% weight loss temperature.

As the apparatus used for the thermogravimetric analysis, for example, a differential thermogravimetric measuring apparatus "NEXTA STA series STA200" (manufactured by Hitachi High-Tech Corporation) may be mentioned.

The method of the thermogravimetric analysis to measure the weight loss temperatures and to prepare a thermogravimetric curve to be described below, will be described specifically in EXAMPLES.

The 2% weight loss temperature of the present polymer is 300°C or higher and less than 420°C, and in view of more excellent roll windability of the fluorinated polymer, preferably 350 to 415°C, more preferably 370 to 410°C.

The 5% weight loss temperature of the present polymer may be for example 320 to 500°C, and in view of more excellent decomposition temperature of the fluorinated polymer, is preferably 380 to 480°C, more preferably 420 to 460°C.

Δ Td of the present polymer is, in view of more excellent decomposition temperature of the fluorinated polymer, preferably 20 to 100°C, more preferably 25 to 70°C.

The fluorinated polymer is subjected to the above thermogravimetric analysis, and the temperature T and the weight M of the fluorinated polymer are plotted, whereby a thermogravimetric curve (TGA curve) indicating the relation between the temperature T and the weight M is obtained.

The present polymer is preferably such that the TGA curve obtained by the thermogravimetric analysis has a plurality of inflection points.

The inflection point on the TGA curve is confirmed by the following method. The TGA curve is further differentiated with respect to the temperature T to obtain a derivative TGA curve of which the vertical axis represents "dM/dT" and the horizontal axis represents "T". In this derivative TGA curve, when a minimum peak at which dM/dT changes from decreasing to increasing or a maximum peak at which dM/dT changes from increasing to decreasing appears, the TGA curve is considered to have an inflection point at the peak temperature of each peak.

Hereinafter, in this specification, a temperature at which an inflection point appears on the TGA curve of the fluorinated polymer, will referred to simply as "inflection point temperature". Among a plurality of inflection points, the temperature of the inflection point appearing at the lowest temperature is defined as the "inflection point temperature". Usually, among minimum peaks at which dM/dT changes from decreasing to increasing in a derivative TGA curve, the minimum peak appearing first from the low temperature side corresponds to the inflection point at the lowest temperature in the TGA curve.

The present polymer is, in view of more excellent roll windability, preferably such that in a TGA curve obtained by the thermogravimetric analysis of the present polymer, the inflection point appears at a temperature lower than the 5% weight loss temperature of the present polymer.

The mechanism how more excellent roll windability is achieved when the inflection point appears at a temperature lower than the 5% weight loss temperature in the TGA curve is not clearly understood but is estimated as follows. That is, in such a case, the fluorinated polymer is considered to contain a low molecular weight component to a certain extent, and the presence of a low molecular weight component to a certain extent makes the fluorinate polymer be readily plasticized and have a low viscosity and thereby have improved roll windability.

In view of more excellent roll windability, in the TGA curve of the present polymer, the inflection point appears more preferably at a temperature lower by 50 to 200°C than the 5% weight loss temperature, further preferably lower by 100 to 150°C than the 5% weight loss temperature.

In view of more excellent roll windability, in the TGA curve of the present polymer, the inflection point appears more preferably at a temperature of 200 to 450°C, further preferably 250 to 350°C.

The storage elastic modulus G' of the solid composition at 100°C at a frequency of 50 cpm is preferably 300 kPa or more, more preferably 350 kPa or more. In view of the moldability of the crosslinked rubber article, the storage elastic modulus G' is preferably 730 kPa or less, more preferably 500 kPa or less.

The storage elastic modulus G' is a value measured in accordance with ASTM D6204, and the measurement conditions are described in detail in EXAMPLES.

An example of adjusting the storage elastic modulus may be a method of adjusting the amount of the monomers used, the order of use, etc.

### [Composition]

Now, the composition of the present polymer will be described.

The present polymer may be a polymer that contains fluorinate atoms and that exhibits rubber properties when crosslinked, preferably has units based on a monomer containing a fluorinate atom (hereinafter also referred to as "fluorinated monomer"), and is preferably a perfluorinated polymer.

The "perfluorinated polymer" refers a polymer of which the main chain is a chain of carbon atoms, which has substantially no hydrogen atom bonded to the carbon atoms and has fluorine atoms instead of the hydrogen atom. The perfluorinated polymer may have a polyvalent atom other than the carbon atom at its side chains, and the polyvalent atom is preferably an oxygen atom.

"Has substantially no hydrogen atom" means a content of hydrogen atoms in the perfluorinated polymer of 0.5 mass% or less, preferably 0.1 mass% or less, more preferably 0.07 mass% or less, further preferably 0.05 mass% or less. The lower limit may be 0 mass%. When the content of hydrogen atoms is within the above range, favorable heat resistance or chemical resistance tends to be obtained. The content of hydrogen atoms in the perfluorinated polymer is obtained by analysis by solid-state nuclear magnetic resonance (NMR).

The present polymer preferably contains units based on tetrafluoroethylene (hereinafter also referred to as "TFE") and units based on a perfluoro(alkyl vinyl ether) (hereinafter also referred to as "PAVE"). Hereinafter, the units based on TFE will also be referred to simply as "TFE units", and the units based on PAVE will also be referred to simply as "PAVE units".

PAVE, from which the PAVE units are derived, is preferably a monomer represented by the formula (1), in view of excellent polymerizability when the fluorinated polymer to be described below is produced, and with a view to more efficiently producing the fluorinated polymer.

CF₂=CF-O-R^{f1} (1)

In the formula (1), R^{f1} is a C₁₋₁₀ perfluoroalkyl group. The number of carbon atoms in R^{f1} is, in view of more excellent polymerizability, preferably 1 to 8, more preferably 1 to 6, further preferably 1 to 5, particularly preferably 1 to 3.

The perfluoroalkyl group may be linear or branched.

Specific examples of PAVE include perfluoro(methyl vinyl ether) (hereinafter also referred to as "PMVE"), perfluoro(ethyl vinyl ether) (hereinafter also referred to as "PEVE") and perfluoro(propyl vinyl ether) (hereinafter also referred to as "PPVE"). With a view to more efficiently producing the fluorinated polymer, PMVE and PPVE are preferred, and PMVE is more preferred.

The content of the TFE units in the present polymer, to the total content of the TFE units and the PAVE units, is preferably 5 to 90 mol%, more preferably 20 to 80 mol%, further preferably 30 to 80 mol%, particularly preferably 40 to 75 mol%. The content of the TFE units to the total content of the TFE units and the PAVE units is also more preferably 5 to 80 mol%.

The content of the PAVE units in the present polymer, to the total content of the TFE units and the PAVE units, is preferably 10 to 95 mol%, more preferably 20 to 80 mol%, further preferably 20 to 70 mol%, particularly preferably 25 to 60 mol%. The content of the PAVE units to the total content of the TFE units and the PAVE units is also more preferably 20 to 95 mol%. The preferred amount used is the same when PMVE or PPVE is used as PAVE.

The total content of the TFE units and the PAVE units in the present polymer, to the total content of all units in the present polymer, is preferably 80 to 100 mol%, more preferably 90 to 100 mol%, further preferably 95 to 100 mol%.

The content of the TFE units in the present polymer, to the total content of all units in the present polymer, is preferably 5 to 90 mol%, more preferably 20 to 80 mol%, further preferably 30 to 80 mol%, particularly preferably 40 to 75 mol%. The content of the TFE units to the total content of all units in the present polymer is also more preferably 5 to 80 mol%.

The content of the PAVE units in the present polymer, to the total content of all units in the present polymer, is preferably 10 to 95 mol%, more preferably 20 to 80 mol%, further preferably 20 to 70 mol%, particularly preferably 25 to 60 mol%. The content of the PAVE units to the total content of all units in the present polymer is also more preferably 20 to 95 mol%. The preferred amount used is the same when PMVE or PPVE is used as PAVE.

The present polymer may contain units based on a monomer other than TFE and PAVE (hereinafter also referred to as "other monomer"), and preferably contains units based on the other monomer.

Specific examples of the other monomer include a monomer having two or more polymerizable unsaturated bonds (hereinafter also referred to as "BO"), a monomer having one or more of at least one type of atom selected from the group consisting of a chlorine atom, a bromine atom and an iodine atom (hereinafter also referred to as "R_{Hal}"), a monomer having a nitrile group (hereinafter also referred to as "R_{CN}"), and a compound represented by the formula (6) to be described below (hereinafter also referred to as "POAVE").

BO is a monomer having two or more polymerizable unsaturated bonds.

The polymerizable unsaturated bond may, for example, be a carbon atom-carbon atom double bond (C=C) and a carbon atom-carbon atom triple bond (C≡C).

The number of the polymerizable unsaturated bonds in BO is preferably 2 to 6, more preferably 2 or 3, further preferably 2, in view of more excellent polymerizability.

BO preferably has a fluorine atom, whereby the resulting crosslinked rubber article has a smaller compression set at high temperature.

BO is preferably a monomer represented by the formula (2), whereby the resulting crosslinked rubber article has more excellent mold release property.

(CR²¹R²²=CR²³-)ₐ₁R²⁴ (2)

In the formula (2), R²¹, R²² and R²³ are each independently a hydrogen atom, a fluorine atom, a methyl group or a trifluoromethyl group, a1 is an integer of 2 to 6, R²⁴ is a C₁₋₁₀ a1-valent perfluorohydrocarbon group, or a group having an etheric oxygen atom at a terminal end or in a carbon-carbon bond of a C₁₋₁₀ a1-valent perfluorohydrocarbon group. The plurality of R²¹, the plurality of R²² and the plurality of R²³ may be respectively identical to each other or different from each other, and they are preferably identical to each other.

a1 is preferably 2 or 3, particularly preferably 2.

R²¹, R²² and R²³ are preferably a fluorine atom or a hydrogen atom, whereby BO is more excellent in polymerizability, it is more preferred that all of R²¹, R²² and R²³ are fluorine atoms or all of them are hydrogen atoms, and it is particularly preferred that all of R²¹, R²² and R²³ are fluorine atoms, whereby the resulting crosslinked rubber article is more excellent in mold release property.

R²⁴ may be linear, branched or cyclic, preferably linear or branched, particularly preferably linear. The number of carbon atoms of R²⁴ is preferably 2 to 8, more preferably 3 to 7, further preferably 3 to 6, particularly preferably 3 to 5.

R²⁴ may or may not have an etheric oxygen atom, but it preferably has an etheric oxygen atom, whereby more excellent crosslinking property and rubber physical properties are achieved.

The number of the etheric oxygen atom in R²⁴ is preferably 1 to 6, more preferably 1 to 3, further preferably 1 or 2. The etheric oxygen atom in R²⁴ is present preferably at a terminal end of R²⁴.

Specific examples of a preferred monomer among the monomers represented by the formula (2) include a monomer represented by the formula (3) and a monomer represented by the formula (4).

(CF₂=CF-)₂R³¹ (3)

In the formula (3), R³¹ is a C₁₋₁₀ bivalent perfluorohydrocarbon group or a group having an etheric oxygen atom at a terminal end or in a carbon-carbon bond of a C₁₋₁₀ bivalent perfluorohydrocarbon group.

(CH₂=CH-)₂R⁴¹ (4)

In the formula (4), R⁴¹ is a C₁₋₁₀ bivalent perfluorohydrocarbon group, or a group having an etheric oxygen atom at a terminal end or in a carbon-carbon bond of a C₁₋₁₀ bivalent perfluorohydrocarbon group.

Specific examples of the monomer represented by the formula (3) include CF₂=CFO(CF₂)₂OCF=CF₂, CF₂=CFO(CF₂)₃OCF=CF₂, CF₂=CFO(CF₂)₄OCF=CF₂, CF₂=CFO(CF₂)₆OCF=CF₂, CF₂=CFO(CF₂)₈OCF=CF₂, CF₂=CFO(CF₂)₂OCF(CF₃)CF₂OCF=CF₂, CF₂=CFO(CF₂)₂O(CF(CF₃)CF₂O)₂CF=CF₂, CF₂=CFOCF₂O(CF₂CF₂O)₂CF=CF₂, CF₂=CFO(CF₂O)₃O(CF(CF₃)CF₂O)₂CF=CF₂, CF₂=CFOCF₂CF(CF₃)O(CF₂)₂OCF(CF₃)CF₂OCF=CF₂, and CF₂=CFOCF₂CF₂O(CF₂O)₂CF₂CF₂OCF=CF₂.

Specific examples of a more preferred monomer among the monomers represented by the formula (3), include CF₂=CFO(CF₂)₃OCF=CF₂ (hereinafter also referred to as "C3DVE"), and CF₂=CFO(CF₂)₄OCF=CF₂ (hereinafter also referred to as "C4DVE").

Specific examples of the monomer represented by the formula (4) include CH₂=CH(CF₂)₂CH=CH₂, CH₂=CH(CF₂)₄CH=CH₂ and CH₂=CH(CF₂)₆CH=CH₂.

Specific examples of a more preferred monomer among the monomers represented by the formula (4) include CH₂=CH(CF₂)₆CH=CH₂ (hereinafter also referred to as "C6DV").

Particularly, BO is preferably C3DVE or C4DVE.

R_{Hal} may be a monomer having a bromine atom or a monomer having an iodine atom.

Specific examples of the monomer having a bromine atom include CF₂=CFOCF₂CF₂CF₂OCF₂CF₂Br, bromotrifluoroethylene, 4-bromo-3,3,4,4-tetrafluorobutene-1 (BTFB), vinyl bromide, 1-bromo-2,2-difluoroethylene, perfluoroallyl bromide, 4-bromo-1,1,2-trifluorobutene-1,4-bromo-1,1,3,3,4,4-hexafluorobutene, 4-bromo-3-chloro-1,1,3,4,4-pentafluorobutene, 6-bromo-5,5,6,6-tetrafluorohexene, 4-bromoperfluorobutene-1, and 3,3-difluoroallyl bromide. Further, fluorinated compounds such as 2-bromo-perfluoroethyl perfluorovinyl ether and CF₂Br-R_{f}-O-CF=CF₂ (wherein R_{f} is a perfluoroalkylene group), for example, fluorovinyl ethers such as CF₂BrCF₂O-CF=CF₂, ROCF=CFBr, and ROCBr=CF₂ (wherein R is a lower alkyl group or a fluoroalkyl group), specifically, CH₃OCF=CFBr and CF₃CH₂OCF=CFBr may be mentioned.

Specific examples of the monomer having an iodine atom include iodized olefins represented by the formula: CHR=CH-Z-CH₂CHR-I (wherein R is -H or -CH_{3,} and R may be the same or different; Z is a linear or branched C₁₋₁₈ (per)fluoroalkylene group which may contain one or more etheric oxygen atoms in some cases, or a (per)fluoropolyoxyalkylene group disclosed in US Patent No. 5674959). Unsaturated ethers of the formulae: I(CH₂CF₂CF₂)ₙOCF=CF₂ and ICH₂CF₂O[CF(CF₃)CF₂O]ₙCF=CF₂ (in the formulae, n=1 to 3) disclosed in US Patent No. 5717036 may also be mentioned. Further, iodoethylene, 4-iodo-3,3,4,4-tetrafluorobutene-1 (ITFB), 3-chloro-4-iodo-3,4,4-trifluorobutene, 2-iodo-1,1,2,2-tetrafluoro-1-(vinyloxy)ethane, 2-iodo-1-(perfluorovinyloxy)-1,1,-2,2-tetrafluoroethylene, 1,1,2,3,3,3-hexafluoro-2-iodo-1-(perfluorovinyloxy)propane, 2-iodoethylvinyl ether, 3,3,4,5,5,5-hexafluoro-4-iodopentene and iodotrifluoroethylene, disclosed in US Patent No. 4694045 may be mentioned. Further, allyl iodide and 2-iodo-perfluoroethyl perfluorovinyl ether may be mentioned.

R_{CN} preferably has a polymerizable unsaturated bond, more preferably has one polymerizable unsaturated bond in view of polymerizability. Specific examples of the polymerizable unsaturated bond include a carbon atom-carbon atom double bond (C=C) and a carbon atom-carbon atom triple bond (C≡C).

R_{CN} is preferably a monomer represented by the following formula (5) in view of more excellent mold release property and heat resistance of a crosslinked rubber article.

CR⁵¹R⁵²=CR⁵³-R⁵⁴-CN (5)

In the formula (5), R⁵¹, R⁵² and R⁵³ are each independently a hydrogen atom, a fluorine atom or a methyl group, and R⁵⁴ is a C₁₋₁₀ bivalent perfluorohydrocarbon group or a group having an etheric oxygen atom at a terminal end or in a carbon-carbon bond of a C₁₋₁₀ bivalent perfluorohydrocarbon group.

In view of excellent polymerizability of R_{CN}, it is preferred that R⁵¹, R⁵² and R⁵³ are a fluorine atom or a hydrogen atom, it is more preferred that all of R⁵¹, R⁵² and R⁵³ are fluorine atoms or all of them are hydrogen atoms, and it is particularly preferred that all of R⁵¹, R⁵² and R⁵³ are fluorine atoms, whereby the resulting crosslinked rubber article is more excellent in mold release property and heat resistance.

R⁵⁴ may be linear, branched or cyclic, and is preferably linear or branched. The number of carbon atoms of R⁵⁴ is preferably 2 to 8, more preferably 3 to 7, further preferably 3 to 6, particularly preferably 3 to 5.

R⁵⁴ may or may not contain an etheric oxygen atom, and in view of more excellent rubber physical properties, preferably contains an etheric oxygen atom.

The number of etheric oxygen atom in R⁵⁴ is preferably 1 to 3, particularly preferably 1 or 2.

Specific examples of the monomer represented by the formula (5) include CF₂=CFOCF₂CF(CF₃)OCF₂CF₂CN (hereinafter also referred to as "8CNVE"), CF₂=CFO(CF₂)₅CN (hereinafter also referred to as "MV5CN"), CF₂=CFOCF₂CF₂CF₂OCF(CF₃)CN and CF₂=CFO(CF₂)₃CN, and in view of more excellent mold release property and heat resistance of a crosslinked rubber article, preferred are 8CNVE and MV5CN.

POAVE is a compound represented by the compound (6).

CF₂=CF(OCF₂CF₂)ₙ-(OCF₂)ₘ-OR^{f2} (6)

In the formula (6), R^{f2} is a C₁₋₄ perfluoroalkyl group, n is an integer of 0 to 3, m is an integer of 0 to 4, and n+m is an integer of 1 to 7.

The perfluoroalkyl group as R^{f2} may be linear or branched. The number of carbon atoms of R^{f2} is preferably 1 to 3.

When n is 0, m is preferably 1 or 2. When n is 1, m is preferably an integer of 2 to 4. When n is 2 or 3, m is preferably 0. n is preferably an integer of 1 to 3.

When the number of carbon atoms of R^{f2}, n and m are within the above ranges, the resulting crosslinked rubber article is excellent in low temperature properties and the productivity of the crosslinked rubber article will improve.

Specific examples of POAVE are as follows. The description in the parentheses after each formula is an abbreviated name for the compound.

CF₂=CF-OCF₂CF₂-(OCF₂)₄-OCF₃ (C9PEVE),

CF₂=CF-OCF₂CF₂-(OCF₂)₂-OCF₃ (C7PEVE),

CF₂=CF-(OCF₂CF₂)₂-OCF₂CF₃ (EEAVE),

CF₂=CF-(OCF₂CF₂)₃-OCF₂CF₃ (EEEAVE),

CF₂=CF-OCF₂-OCF₃, CF₂=CF-OCF₂-OCF₂-OCF₃

POAVE is preferably C9PEVE, C7PEVE, EEAVE or EEEAVE in view of more excellent low temperature property and productivity of the resulting crosslinked rubber article.

Such compounds may be produced by the method described in WO00/056694 from the corresponding alcohols as raw materials.

In the present polymer, the content of the units based on the other monomer to the total content of all units in the present polymer is preferably 0.01 to 20 mol%, more preferably 0.01 to 10 mol%, further preferably 0.01 to 5 mol%.

In view of more excellent crosslinkability, the present polymer preferably contains at least one member selected from the group consisting of a polymerizable unsaturated bond, a chlorine atom, a bromine atom, an iodine atom and a nitrile group, more preferably contains at least one member selected from the group consisting of a polymerizable unsaturated bond, a bromine atom, an iodine atom and a nitrile group. In particular, the present polymer preferably contains the above atom or group on at least one of the terminal end groups and side chains.

In production of the fluorinated polymer, by using the above other monomer in addition to TFE and PAVE, at least one of a polymerizable unsaturated bond, a chlorine atom, a bromine atom, an iodine atom and a nitrile group can be introduced to the terminal end group or the side chain of the fluorinated polymer. Further, by polymerizing the monomers using a chain transfer agent containing an iodine atom, the iodine atom may be introduced to the terminal end of the fluorinated polymer.

In a case where the present polymer contains an iodine atom, the content of the iodine atom to the total mass of the present polymer is preferably 0.01 to 5.00 mass%, more preferably 0.01 to 2.00 mass%, further preferably 0.01 to 1.00 mass%.

### [Method for producing fluorinated polymer]

As a method for producing the fluorinated polymer, for example, a method of copolymerizing monomers including TFE and PAVE, and optionally used other monomers in the presence of a polymerization initiator may be mentioned.

The polymerization method may, for example, be emulsion polymerization, solution polymerization or suspension polymerization, and in view of excellent adjustment of the molecular weight and the copolymer composition, and the productivity, preferably emulsion polymerization.

In a case where production of the fluorinated polymer is performed by emulsion polymerization, for example, emulsion polymerization may be conduced by heating the monomers in the presence of an aqueous medium and a polymerization initiator and an optionally used emulsifier.

As a preferred embodiment of the method for producing the present polymer, the following method for producing a fluorinated polymer may be mentioned. That is, in an aqueous dispersion that contains substantially no water-soluble emulsifier, that contains a first fluorinated polymer having TFE units and PAVE units, and that contains an aqueous medium (hereinafter also referred to as "first aqueous dispersion"), monomers containing TFE and PAVE (hereinafter also referred to as "specific monomers") are polymerized to produce a polymer (hereinafter also referred to as "second fluorinated polymer"), and an aqueous dispersion containing the second fluorinated polymer obtained (hereinafter also referred to as "second aqueous dispersion") is subjected to a stirring treatment to agglomerate the second fluorinated polymer, and the agglomerated second fluorinated polymer is recovered.

In the present embodiment, the step of polymerizing the specific monomers in the first aqueous dispersion to obtain the second aqueous dispersion containing the second fluorinated polymer will also be referred to as "step 1", and the step of subjecting the second aqueous dispersion to a stirring treatment to agglomerate the second fluorinated polymer and recovering the agglomerated second fluorinated polymer will also be referred to as "step 2". Now, the respective steps will be described in detail.

### <Step 1>

In step 1, the specific monomers containing TFE and PAVE are polymerized in the first aqueous dispersion that contains substantially no water-soluble emulsifier and that contains the first fluorinated polymer and an aqueous medium.

The first aqueous dispersion contains substantially no water-soluble emulsifier.

"Contains substantially no water-soluble emulsifier" means a content of the water-soluble emulsifier in the first aqueous dispersion to the total mass of the first aqueous dispersion of 10 mass ppm or less, preferably 100 mass ppb or less, more preferably 50 mass ppb or less. The content is also preferably the quantitative determination limit or less in the measurement method described in EXAMPLES. The lower limit may be 1 mass ppb.

The content of the water-soluble emulsifier may be measured by liquid chromatography mass spectrometer. Specifically, the measurement method described in WO2018/181904, paragraphs [0721] to [0732] may be mentioned, and the measurement method described in EXAMPLES is preferred.

The water-soluble emulsifier refers to an emulsifier having a solubility in 1000 g of water at 25°C of 100 mg or more.

The water-soluble emulsifier may be an emulsifier having a fluorine atom or an emulsifier having no fluorine atom, which is water-soluble. Neither of the first fluorinated polymer nor the second fluorinated polymer to be described below corresponds to an emulsifier.

The water-soluble emulsifier may be either ionic or non-ionic.

The emulsifier having a fluorine atom may be an anionic fluorinated emulsifier.

The anionic fluorinated emulsifier may be an emulsifier of which the moiety excluding the anionic group has a total number of carbon atoms of 20 or less and which has a fluorine atom, or an emulsifier of which the anionic moiety has a molecular weight of 800 or less and which has a fluorine atom.

The emulsifier having no fluorine atom has no fluorine atom and has a hydrocarbon group such as an alkyl group. The hydrogen atom in the hydrocarbon group of the emulsifier having no fluorine atom, may be replaced with a halogen atom other than a fluorine atom.

The emulsifier having no fluorine atom may be an ionic hydrocarbon emulsifier or a non-ionic hydrocarbon emulsifier.

The ionic hydrocarbon emulsifier may be an anionic hydrocarbon emulsifier.

The anionic hydrocarbon emulsifier refers to a hydrocarbon emulsifier having a negatively charged hydrophilic moiety such as a carboxylate group, a sulfonate group, a sulfate group, a phosphonate group or a phosphate group, and having a hydrocarbon moiety such as an alkyl group as the hydrophobic moiety.

Examples of the anionic hydrocarbon emulsifier include a highly branched C10 tertiary carboxylic acid available as Versatic (registered trademark) 10 from Resolution Performance Products, sodium linear alkyl polyether sulfonate available as Avanel (registered trademark) S series from BASF, sodium dodecyl sulfate, and sulfosuccinate emulsifier Lankropol (registered trademark) K8300 available from AkzoNobel Surface Chemistry LLC.

The non-ionic hydrocarbon emulsifier is am emulsifier which does not dissociate into ions in water and show surface activity, and has a hydrocarbon group such as an alkyl group as the hydrophobic moiety.

The hydrophilic moiety of the non-ionic hydrocarbon emulsifier may be a water-soluble functional group such as a polyethylene oxide chain, obtained by polymerization of ethylene oxide. The non-ionic hydrocarbon emulsifier may be a polyalkylene oxide block copolymer, for example, a block copolymer having polyethylene oxide and polypropylene oxide.

As the non-ionic hydrocarbon emulsifier, emulsifiers as described in JP-A-2016-537499 at paragraphs [0043] to [0052] may be mentioned.

The emulsifier having a fluorine atom and the emulsifier having no fluorine atom may contain a silicon atom. The emulsifier containing a silicon atom may be a siloxane emulsifier.

The siloxane emulsifier may be emulsifiers as described in US Patent No. 6,841,616 (Wille et al) and US Patent No. 7,977,438 (Brothers et al).

The emulsifier having a fluorine atom and the emulsifier having no fluorine atom may be a polymer emulsifier. The polymer emulsifier may be a water-soluble polymer having a hydrophilic group at its side chain. Such a polymer emulsifier may, for example, be a polymer having units based on a compound having a polymerizable moiety and a hydrophilic group. Further, a polymer which had no hydrophilic group at the time of polymerization but had units based on a compound having a group convertible to a hydrophilic group, having been subjected to post-treatment such as hydrolysis, may also be mentioned.

The first aqueous dispersion preferably contains substantially none of emulsifiers represented by the formulae (S1) to (S4). When no emulsifier is used at the time of production of the first fluorinated polymer contained in the first aqueous dispersion, generation of the compounds represented by the formulae (S1) to (S4) can be suppressed, and the contents of these compounds can readily be adjusted.

H-(CF₂)ₙ₁-COOM (S1)

F-(CF₂)ₙ₁-COOM (S2)

H-(CF₂)ₙ₂-SO₃M (S3)

F-(CF₂)ₙ₂-SO₃M (S4)

In the formulae (S1) to (S4),
n1 is an integer of 3 to 19,
n2 is an integer of 4 to 20, and
M is each independently a hydrogen atom, Na, K or NH₄.

The first fluorinated polymer is a fluorinated polymer containing the TFE unis and the PAVE units.

It is estimated to be as follows. That is, the first fluorinated polymer, at the time of polymerization of the specific monomers to be described below, adsorbs and includes the specific monomers at its hydrophobic moiety to solubilize the specific monomers even when the first aqueous dispersion contains no emulsifier, and facilitate the polymerization of the specific monomers. Further, the first fluorinated polymer contributes to dispersion stabilization in the first aqueous dispersion.

The details of PAVE are the same as those of PAVE from which the PAVE units of the present polymer are derived, and the preferred embodiment is also the same.

With a view to more efficiently producing the fluorinated polymer, in the first fluorinated polymer, the content of the TFE units to the total content of the TFE units and the PAVE units, is preferably 40 to 85 mol%, more preferably 50 to 75 mol%, further preferably 60 to 70 mol%.

With a view to more efficiently producing the fluorinated polymer, in the first fluorinated polymer, the content of the PAVE units to the total content of the TFE units and the PAVE units, is preferably 15 to 60 mol%, more preferably 25 to 55 mol%, further preferably 30 to 40 mol%. The preferred amount used is the same when PMVE or PPVE is used as PAVE.

In the first fluorinated polymer, the total content of the TFE units and the PAVE units to the total content of all units of the first fluorinated polymer, is preferably 99.0 to 100.0 mol%, more preferably 99.5 to 100.0 mol%, further preferably 99.9 to 100.0 mol%.

The first fluorinated polymer may contain units based on a monomer other than TFE and PAVE, and with a view to more efficiently producing the fluorinated polymer, it also preferably contains substantially no units based on other monomer.

"Contains substantially no units based on other monomer" means a content of the units based on the other monomer, to the total content of all units of the first fluorinated polymer, of 0.01 mol% or less, preferably 0 mol%.

With a view to more efficiently producing the fluorinated polymer, before the start of the polymerization of the specific monomers, the content of the first fluorinated polymer to the total mass of the first aqueous dispersion is preferably 0.01 to 4.0 mass%, more preferably 0.1 to 1.0 mass%, further preferably 0.3 to 0.7 mass%.

In this specification, "before the start of the polymerization of the specific monomers" means immediately before the polymerization start point. The "polymerization start point" means a point when the specific monomers (the specific monomers and a polymerization initiator if used) are allowed to coexist in a reactor after the interior of the reactor is heated to the polymerization temperature or higher, a point when the interior of the reactor is heated to the polymerization temperature or higher after the specific monomers (the specific monomers and a polymerization initiator if used) are allowed to coexist in the reactor, or the like.

The content (solid content) of the first fluorinated polymer in the first aqueous dispersion may be measured, for example, as follows.

2.0 g of the first aqueous dispersion is heated at 170°C for 20 minutes, the mass of the residue is weighed, and the solid concentration is calculated in accordance with the following formula. 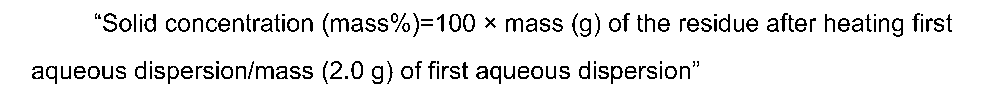 "Solid concentration (mass%)=100 × mass (g) of the residue after heating first aqueous dispersion/mass (2.0 g) of first aqueous dispersion"

The preferred embodiment of step 1 may be an embodiment in which the content of the PAVE units to the total content of the TFE units and the PAVE units in the first fluorinated polymer is 20 to 80 mol%, and before the start of polymerization of the monomers, the content of the first fluorinated polymer to the total mass of the first aqueous dispersion is 0.01 to 4.0 mass%.

The method for producing the first fluorinated polymer is preferably a method of polymerizing monomers containing TFE and PAVE in an aqueous medium in the presence of a polymerization initiator. By this method, the first fluorinated polymer dispersed in the form of particles in the aqueous medium is obtained.

The aqueous medium having particles of the first fluorinated polymer dispersed thus obtained may be used as it is as the first aqueous dispersion. Otherwise, by solvent replacement, the particles of the first fluorinated polymer may be dispersed in other aqueous medium, and this dispersion may be used as the first aqueous dispersion.

The polymerization initiator used for the production of the first fluorinated polymer is preferably a water-soluble polymerization initiator. Among water-soluble polymerization initiators, a persulfate such as ammonium persulfate, sodium persulfate or potassium persulfate, or an organic polymerization initiator such as disuccinic peroxide or azobisisobutylamidine dihydrochloride, is more preferred, a persulfate is further preferred, and among persulfates, ammonium persulfate is particularly preferred.

The aqueous medium used for production of the first fluorinated polymer may, for example, be water or a solvent mixture of water and a water-soluble organic solvent. Specific examples of the water-soluble organic solvent include tert-butanol, propylene glycol, dipropylene glycol, dipropylene glycol monomethyl ether and tripropylene glycol.

It is preferred that in production of the first fluorinated polymer, the aqueous medium containing the monomers preferably contains no emulsifier. The emulsifier (e.g. the type of the emulsifier) is as described above.

The first aqueous dispersion containing the first fluorinated polymer is used for the polymerization of the specific monomers, preferably after conducting a purification treatment to reduce or deactivate the polymerization initiator and decomposed products thereof. In the purification treatment, by removing the polymerization initiator and decomposed products thereof which may be contained in the first aqueous dispersion containing the first fluorinated polymer, the fluorinated polymer having desired physical property values is likely to be obtained.

The purification treatment method may be heat treatment or removal using an ion exchange resin (preferably an anion exchange resin).

The purification treatment may be conducted several times.

The anion exchange resin is preferably spherical. The average particle size of the anion exchange resin is preferably 0.1 to 5 mm, more preferably 0.2 to 2 mm, further preferably 0.3 to 1.5 mm. When the average particle size of the anion exchange resin is within the above range, clogging is less likely to occur during packing of the anion exchange resin. The average particle size of the anion exchange resin is a value measured by screening method. Specifically, first, the anion exchange resin is subjected to a sieve shaker, and the particle size distribution is measured by sieving. The diameter of the screen opening corresponding to 50 mass% of the cumulative retained mass is obtained and is taken as the average particle size.

The anion exchange resin may be of a gel type or a microporous type, and the polymer matrix of the resin may be acrylic-based or styrene-based. The functional group of the anion exchange resin may be strongly basic or weakly basic, and in view of impurity adsorption efficiency, preferably strongly basic. The counter anion of the anion exchange resin may be a chloride ion or a hydroxide ion, and with a view to further reducing the impurity concentration in the aqueous dispersion, preferably a hydroxide ion.

The aqueous medium contained in the first aqueous dispersion may, for example, be the aqueous medium used for the production of the first fluorinated polymer.

Before the start of the polymerization of the specific monomers, the content of the aqueous medium to the total mass of the first aqueous dispersion is preferably 60 to 99.9 mass%, more preferably 96 to 99.9 mass%, further preferably 98 to 99.9 mass%.

The first aqueous dispersion may contain other component other than the first fluorinated polymer and the aqueous medium.

Specific examples of the other component include a reducing agent, a pH adjusting agent and a chain transfer agent to be described below.

Specific examples of the pH adjusting agent include an inorganic salt and ammonia. Specific examples of the inorganic salt include phosphates such as disodium hydrogenphosphate and sodium dihydrogen phosphate, and carbonates such as sodium hydrogen carbonate and sodium carbonate. More preferred specific examples of the phosphate include disodium hydrogenphosphate dihydrate and disodium hydrogenphosphate dodecahydrate.

In a case where the first aqueous dispersion contains the pH adjusting agent, the content of the pH adjusting agent is preferably 0.004 to 3.0 parts by mass per 100 parts by mass of the aqueous medium.

### (Specific monomers)

The specific monomers are monomers containing TFE and PAVE. The preferred embodiments of TFE and PAVE as the specific monomers are the same as the preferred embodiments of TFE and PAVE in the above-described first fluorinated polymer.

The total amount of TFE and PAVE used, to the amount of the specific monomers used, is preferably 80 to 100 mol%, more preferably 90 to 100 mol%, further preferably 95 to 100 mol%.

The specific monomers may contain a monomer other than TFE and PAVE (hereinafter also referred to as "other monomer").

Specific examples of the other monomer include the above-described BO, R_{Hal}, R_{CN} and POAVE.

Preferred embodiments of such other monomers are the same as the preferred embodiments of the other monomer in the description of the units based on the other monomer which may be contained in the present polymer.

The amount of the other monomer used, to the amount of the specific monomers used, is preferably 0 to 20 mol%, more preferably 0 to 10 mol%, further preferably 0 to 5 mol%.

The specific monomers preferably consist solely of TFE and PAVE, or preferably contain TFE and PAVE and further contain at least one monomer selected from the group consisting of BO, R_{Hal} and R_{CN}.

In step 1, the specific monomers are polymerized preferably in the presence of a polymerization initiator.

The polymerization initiator is preferably an oil-soluble radical initiator, a water-soluble radical initiator or a water-soluble redox catalyst.

Specific examples of the oil-soluble radical initiator include oil-soluble organic peroxides such as tert-butyl peroxypivalate (hereinafter also referred to as "PBPV") and diisopropyl peroxydicarbonate (hereinafter also referred to as "IPP").

Specific examples of the water-soluble radical initiator include water-soluble organic peroxides such as persulfates including ammonium persulfate, potassium persulfate, etc., and water-soluble organic peroxides such as disuccinic peroxide, bisglutaric peroxide and tert-butyl hydroperoxide (hereinafter also referred to as "TBHP").

The water-soluble redox catalyst is preferably a combination of an oxidizing agent such as bromic acid or its salt, chloric acid or its salt, persulfuric acid or its salt, permanganic acid or its salt, or hydrogen peroxide, and a reducing agent such as sulfurous acid or its salt, hydrogensulfite or its salt, thiosulfuric acid or its salt, an organic acid or an inorganic salt. The persulfate is preferably potassium persulfate or ammonium persulfate. The sulfite is preferably sodium sulfite. The inorganic salt is preferably a combination of sulfate anion, sulfite anion or chloride anion and metal ion. The metal ion is preferably a transition metal ion, such as a manganese, iron, cobalt, nickel, copper, zinc, cerium or silver ion, and is preferably an iron ion. The inorganic salt is preferably iron(II) sulfate.

The polymerization initiator is preferably the oil-soluble radical initiator or the water-soluble radical initiator, and with a view to more efficiently producing the fluorinated polymer, more preferably the water-soluble radical initiator, further preferably a persulfate or a water-soluble organic peroxide.

The polymerization initiator may be used in combination of two or more types.

The amount of the initiator used is, per 100 parts by mass of the specific monomers used, preferably 0.01 to 5 parts by mass, more preferably 0.01 to 3 parts by mass, further preferably 0.01 to 2 parts by mass.

### (Chain transfer agent)

In step 1, the specific monomers are also preferably polymerized in the presence of a chain transfer agent.

Specific examples of the chain transfer agent include a chain transfer agent having an iodine atom, ethyl acetate, methanol, ethanol, t-butyl methyl ether, diethyl ether, n-pentane, cyclohexane, methane and propane, and a chain transfer agent having an iodine atom is preferred. By polymerizing the specific monomers using the chain transfer agent having an iodine atom, a second fluorinated polymer having an iodine atom at its terminal end can be produced.

The chain transfer agent having an iodine atom is preferably a compound represented by the formula (I).

(R^{f})-(X)₂ (I)

In the formula (I),
R^{f} is a C₁₋₁₆ fluoroalkylene group, or an aromatic group,
X is an iodine atom or a bromine atom, provided that at least one of the two is an iodine atom.

The fluoroalkylene group as R^{f} may be linear or branched. R^{f} is preferably a perfluoroalkylene group.

It is preferred that both X are iodine atoms.

Specific examples of the compound represented by the formula (I) include 1,2-diiodoperfluoroethane, 1,3-diiodoperfluoropropane, 1,4-diiodoperfluorobutane (hereinafter also referred to as "C4DI"), 1,5-diiodoperfluoropentane, 1,6-diiodoperfluorohexane, 1,8-diiodoperfluorooctane, 1,3-diiodo-2-chloroperfluoropropane, 1,5-diiodo-2,4-dichloroperfluoropentane, 1,12-diiodoperfluorododecane, 1,16-diiodoperfluorohexadecane, diiodomethane, 1,2-diiodoethane, 1,3-diiodo-n-propane, (2-iodoethyl) substitute of benzene, 1-iodo-4-bromoperfluorobutane, 1-iodo-6-bromoperfluorohexane, 1-iodo-8-bromoperfluorooctane, 1-bromo-2-iodoperfluoroethane, 1-bromo-3-iodoperfluoropropane, 2-bromo-3-iodoperfluorobutane, 3-bromo-4-iodoperfluorobutene-1, 2-bromo-4-iodoperfluorobutene-1, and monoiodomonobromo substitute and diiodomonobromo substitute of benzene.

The compound represented by the formula (I) is preferably C4DI.

The amount of the chain transfer agent used, per 100 parts by mass of the specific monomers used, is preferably 0.1 to 10 parts by mass, more preferably 0.5 to 5 parts by mass, further preferably 1 to 3 parts by mass.

In view of more excellent crosslinkability of the fluorinated polymer produced, in the method for producing the fluorinated polymer according the present embodiment, it is preferred that the specific monomers contains at least one monomer selected from the group consisting of the above BO, R_{Hal} and R_{CN}, or the first aqueous dispersion contains the chain transfer agent containing an iodine atom.

Step 1 is a step of polymerizing the specific monomers in the first aqueous dispersion to obtain the second aqueous dispersion containing the second fluorinated polymer.

The specific monomers are charged into a reaction system (that is a polymerization reactor) by a conventional method. For example, the specific monomers may be charged into the reaction system continuously or intermittently so as to keep a predetermined polymerization pressure. Otherwise, the specific monomers may be dissolved in the aqueous medium and the obtained solution is continuously or intermittently charged into the reaction system.

In a case where the polymerization initiator is used, the polymerization initiator may be added to the reaction system all at once or in divided portions. Further, in a case where other component (for example the chain transfer agent) is used, the other component may be added to the reaction system all at once or in divided portions.

The polymerization temperature is preferably 10 to 95°C, more preferably 15 to 90°C.

The polymerization pressure is preferably 0.5 to 4.0 MPaG, more preferably 0.6 to 3.5 MPaG.

The polymerization time is preferably 90 to 1000 minutes, more preferably 90 to 700 minutes in the case of batch treatment.

The polymerization of the specific monomer is conducted preferably in a reaction system in which substantially no emulsifier is present.

The emulsifier may be the above-described emulsifier.

"Substantially no emulsifier is present" means an environment in which the content of the emulsifier is 0.03 mass ppm or less to the total mass of the aqueous medium contained in the first aqueous dispersion, and the content is preferably 0.02 mass ppm or less, more preferably 0 mass ppm.

By step 1, the second fluorinated polymer according to the present embodiment is formed, and the second aqueous dispersion that has particles of the second fluorinated polymer dispersed in the aqueous medium is obtained.

### (Second aqueous dispersion)

The second aqueous dispersion is an aqueous dispersion containing the second fluorinated polymer obtained by step 1. In other words, the second aqueous dispersion is an aqueous dispersion that has particles containing the second fluorinated polymer (hereinafter also referred to as "specific particles") dispersed in the aqueous medium.

The specific particles may or may not contain the first fluorinated polymer.

The second aqueous dispersion may contain the first fluorinated polymer dispersed in the form of particles.

The preferred embodiment of the second fluorinated polymer contained in the second aqueous dispersion is as described above.

The content of the specific particles containing the second fluorinated polymer to the total mass of the second aqueous dispersion is, in view of dispersion stability of the specific particles, preferably 1 to 50 mass%, more preferably 1 to 40 mass%, further preferably 1 to 30 mass%.

The average particle size of the specific particles is preferably 1 µm or less, and in view of dispersion stability of the specific particles, more preferably 500 nm or less, further preferably 400 nm or less.

The average particle size of the specific particles is, in view of the recovery efficiency in step 2 to be described below, preferably 50 nm or more, more preferably 70 nm or more, further preferably 100 nm or more.

The average particle size of the specific particles is a particle size calculated by analyzing the autocorrelation function, which is obtained by dynamic light scattering measurements, using the cumulant method under the assumption of a monodisperse particle distribution.

Specific examples and preferred embodiment of the aqueous medium contained in the second aqueous dispersion are the same as the specific examples and the preferred embodiment of the aqueous medium contained in the above first aqueous dispersion.

The content of the aqueous medium to the total mass of the second aqueous dispersion is, in view of dispersion stability of the specific particles, preferably 50 to 99 mass%, more preferably 60 to 99 mass%, further preferably 70 to 99 mass%.

The content of the emulsifier in the second aqueous dispersion, to the total mass of the second aqueous dispersion, is preferably 100 mass ppm or less, more preferably 75 mass ppm or less, further preferably 50 mass ppm or less, particularly preferably 1 mass ppm or less. The content is also preferably the quantitative determination limit or less of the method of measuring the content of the emulsifier. The lower limit may be 1 mass ppb.

The content of the emulsifier may be measured by the same method for the above first aqueous dispersion.

Specific examples of the emulsifier are as described above. The emulsifier in the second aqueous dispersion may or may not be water-soluble.

### <Step 2>

Step 2 is a step of subjecting the second aqueous dispersion obtained in step 1 to a stirring treatment to agglomerate the second fluorinated polymer thereby to obtain an agglomerated second fluorinated polymer.

### (Stirring treatment)

The stirring treatment may be a known stirring treatment to impart shear force to the second aqueous dispersion, and is preferably a stirring treatment using a stirring apparatus configured to rotate a stirring shaft provided with an impeller.

The shape of the impeller may, for example, be a paddle impeller, a propeller impeller, a disc impeller, a Foudler impeller, an anchor impeller, a turbine impeller or a disc turbine impeller, and with a view to easily producing the present polymer and in view of excellent stirring efficiency, a disc turbine impeller is preferred.

The number of the impeller is preferably 1 to 10, more preferably 2 to 4.

Specific examples of the shape of a vessel used in the above stirring treatment include a cylindrical shape, a conical shape, an elliptic cylindrical shape, a rectangular cylindrical shape, and a pyramidal shape, and in view of mixing property and flowability, a cylindrical shape is preferred.

The stirring apparatus may have a baffle plate.

The stirring time is preferably 0.1 to 24 hours, more preferably 0.1 to 12 hours, further preferably 0.1 to 6 hours.

The number of revolutions during stirring is preferably 500 rpm or more, more preferably 1000 rpm or more. The number of revolutions during stirring is preferably 5000 rpm or less. The number of revolutions may be constant during stirring or may change during stirring. The number of revolutions during stirring is also preferably higher than the circumferential speed in step 1.

The temperature of the aqueous dispersion during the stirring treatment is preferably 10 to 90°C, more preferably 10 to 80°C, further preferably 15 to 70°C.

By the stirring treatment, a solid containing the agglomerated second fluorinated polymer is obtained.

In this specification, the solid refers to a solid that is not stably dispersed in the aqueous medium, and a dispersoid that is stably dispersed in the aqueous medium is not considered as a solid even if it is a solid insoluble in the aqueous medium. For example, among insoluble components (for example the specific particles) contained in the second aqueous dispersion after stirring, a dispersoid that is stably dispersed in the aqueous medium is not included in the solid, and a precipitate, a float, etc. that are not stably dispersed in the aqueous medium are included in the solid. The solid may, for example, be an agglomerate of the second fluorinated polymer.

The dispersoid stably dispersed may, for example, be a dispersoid which passes Type 5A filter paper as specified in JIS P 3801 (Filter paper for chemical analysis).

The particle size of the solid may, for example, be 500 µm or more, and is preferably 1000 µm or more.

The agglomerate of the second fluorinated polymer separated by the stirring treatment is recovered to obtain the fluorinated polymer containing the TFE units and the PAVE units.

The method of recovering the agglomerate of the second fluorinated polymer may be filtration or centrifugal separation and is preferably filtration.

### <Washing step>

The method for producing the fluorinated polymer preferably further has a step of washing the recovered second fluorinated polymer (hereinafter also referred to as "step 3").

By step 3, other components (for example the emulsifier, the monomers, the polymerization initiator, and reaction products thereof) attached to the second fluorinated polymer can be removed, and a crosslinked rubber article having desired physical properties is likely to be obtained.

The washing liquid in the washing step may be the above-described aqueous medium, and is preferably water, more preferably ultrapure water.

Specific examples of the washing method include a method of dipping the recovered second fluorinated polymer in a washing liquid, and a method of showering the recovered second fluorinated polymer with a washing liquid.

The amount of the washing liquid in the washing step is preferably 1 to 50 times, more preferably 3 to 30 times, further preferably 5 to 15 times, the total mass of the second fluorinated polymer.

The temperature of the washing liquid in the washing step is preferably 5 to 50°C, more preferably 10 to 40°C, further preferably 15 to 30°C.

### [Solid composition]

The fluorinated polymer obtained by the above production method may be in the form of a solid composition.

In this specification, the solid composition means a composition having a solid content mass of 99 mass% or more.

The solid content mass is calculated by the following method based on the mass before and after heating.

2.0 g of the solid composition is heated at 170°C for 20 minutes, the mass of the residue is weighed, and the solid content mass is calculated in accordance with the following formula.$Solid content mass \left(mass%\right) = 100 \times \left(mass of residue\right) / \left(mass of solid composition\right)$

The content of the fluorinated polymer in the solid composition, to the total mass of the solid composition, is preferably 99.0 to 100 mass%, more preferably 99.5 to 100 mass%, further preferably 99.8 to 100 mass%.

The solid composition containing the fluorinated polymer preferably contains substantially no emulsifier.

"The solid composition contains substantially no emulsifier" means a content of the emulsifier to the total mass of the solid composition of 10 mass ppm or less, preferably 150 mass ppb or less, more preferably 50 mass ppb or less. The lower limit of the content of the emulsifier is 0 mass ppb.

The content of the compound represented by the formula (S1) in the solid composition is preferably 10 mass ppm or less, more preferably 150 mass ppb or less, further preferably 50 mass ppm or less. The lower limit of the content of the formula (S1) is 0 mass ppb.

The method of measuring the content of the emulsifier, and the emulsifier which the solid composition may contain, are as defined above.

The metal content of the solid composition to the total mass of the solid composition is preferably 50 mass ppm or less, more preferably 20 mass ppm or less, further preferably 10 mass ppm or less. The content is also preferably the measurement limit or less in the following measurement method. The lower limit may be 1 mass ppb.

The metal content is the total content of 29 metal elements (Fe, Na, K, Li, Be, Mg, Al, Ca, Ti, V, Cr, Mn, Co, Ni, Cu, Zn, Ga, Rb, Sr, Zr, Mo, Ag, Cd, In, Sn, Cs, Ba, Pb and Bi) measured by external calibration method using an inductively coupled plasma mass spectroscope.

The method of measuring the metal content of the solid composition may be a method of incinerating the solid composition and dissolving the obtained ash in an acid, and subjecting the solution to measurement by an inductively coupled plasma mass spectroscope.

In the method for producing the fluorinated polymer according the present embodiment, by using the stirring apparatus provided with the impeller, an energy required for agglomeration can be applied without an agglomerating agent, and thus it is not necessary to use an agglomerating agent containing a metal in recovery of the fluorinated polymer. Thus, the metal content of the solid composition can readily be adjusted to be within the above range.

The solid composition is also preferably a fluorinated elastomer.

The "fluorinated elastomer" is an elastic fluorinated polymer that has a storage elastic modulus G' at 100°C at a frequency of 50 cpm, measured in accordance with ASTM D6204, of 80 kPa or more and that has no melting point, and is distinguished from a fluororesin.

### <Shape>

The solid composition containing the fluorinated polymer according the present embodiment may be deformed into an appropriate shape in accordance with the method for producing the crosslinked rubber article and the application of the crosslinked rubber article.

The solid composition may be in the form of a sheet, granules, a tube or a fiber, or may not be formed into a specific shape.

### [Application]

The fluorinated polymer according the present embodiment is used preferably for production of a crosslinked rubber article.

The crosslinked rubber article is produced by crosslinking the present polymer or the solid composition.

The crosslinking method may, for example, be a method of adding a crosslinking agent, followed by kneading or molding.

Specific examples of the crosslinking agent include an organic peroxide, a polyol, an amie or a triazine, and an organic peroxide is preferred in view of the productivity, heat resistance and chemical resistance of the crosslinked rubber article.

Specific examples of the organic peroxide include a dialkyl peroxide, α,α'-bis(tert-butylperoxy)-p-diisopropylbenzene, α,α'-bis(tert-butylperoxy)-m-diisopropylbenzene, benzoyl peroxide, tert-butylperoxybenzene, and 2,5-dimethyl-2,5-di(benzoylperoxy)hexane.

Specific examples of the dialkyl peroxide include 1,1-di(tert-butyl peroxy)-3,3,5-trimethylcyclohexane, 2,5-dimethylhexane-2,5-dihydroxy peroxide, tert-butyl cumyl peroxide, dicumyl peroxide, 2,5-dimethyl-2,5-di(tert-butylperoxy)hexane, 2,5-dimethyl-2,5-di(tert-butylperoxy)-3-hexyne, tert-butylperoxymaleic acid, and tert-butyl peroxyisopropyl carbonate.

In production of the crosslinked rubber article, a component other than the crosslinking agent may be used. The other component may, for example, be a catalyst, a crosslinking aid, an acid acceptor, a filler, a reinforcing agent, a scorch retarder, a crown ether, or a mold release agent.

The molding method may, for example, be injection molding, extrusion, coextrusion, blow molding, compression molding, inflation molding, transfer molding or calendering.

The crosslinked rubber article is suitable as materials for O-rings, sheets, gaskets, oil seals, diaphragms, V-rings and the like. The crosslinked rubber article can also be used for various applications such as heat-resistant chemical-resistant sealing materials, heat-resistant oil-resistant sealing materials, wire sheath materials, sealing materials for semiconductor equipment, sealing materials for liquid crystal display panel manufacturing equipment, sealing materials for light emitting diode manufacturing equipment, corrosion-resistant rubber paints, sealing materials for urea-resistant grease etc., rubber paints, adhesive rubber, hoses, tubes, calendered sheets (rolls), sponges, rubber rolls, oil drilling members, heat dissipation sheets, solution-crosslinked materials, rubber sponges, bearing seals (urea resistant grease etc.), linings (resistant to chemical), insulating sheets for vehicles, insulating sheets for electronic equipment, rubber bands for watches, endoscope packings (resistant to amine), bellows hoses (produced from calendered sheets), packings/valves for water heaters, fenders (for marine civil engineering and ships), fibers and non-woven fabrics (protective clothing etc.), sealing materials for substrates, rubber gloves, stators of single-screw eccentric pumps, parts for urea SCR systems, vibration isolators, damping materials, sealants, additives to other materials, and toys.

### [Second embodiment]

The method for producing a fluorinated polymer according to a second embodiment of the present invention (hereinafter also referred to as "the production method according to the present embodiment") will be described.

The production method according to the present embodiment is a method for producing a fluorinated polymer, by polymerizing monomers containing TFE and PAVE (specific monomers) in an aqueous dispersion that contains substantially no water-soluble emulsifier, that contains a fluorinated polymer having TFE units and PAVE units, and that contains an aqueous medium (first aqueous dispersion) to produce a second fluorinated polymer.

In the present embodiment, the content of the PAVE units to the total content of the TFE units and the PAVE units in the first fluorinated polymer is 20 to 80 mol%, the content of the PAVE units to the total content of the TFE units and the PAVE units in the second fluorinated polymer is 20 to 80 mol%, and before the start of the polymerization of the monomers, the content of the fluorinated polymer to the total mass of the first aqueous dispersion is 0.01 to 4.0 mass%.

In the present embodiment, after the monomers are polymerized in the aqueous dispersion, the aqueous dispersion containing the second fluorinated polymer (second aqueous dispersion) is stirred by means of a disc turbine impeller at a number of revolutions of 1000 rpm or more to agglomerate the second fluorinated polymer, and the agglomerated second fluorinated polymer is recovered.

By the production method according to the present embodiment, a fluorinated polymer having a high decomposition temperature and being excellent in the roll windability can be produced. The mechanism has not been understood in detail yet, but is estimated as follows. By polymerization in the first aqueous dispersion containing the predetermined first fluorinated polymer in a predetermined amount, the first fluorinated polymer functions as a polymerization site and the monomers can be polymerized without using an emulsifier, and by stirring the aqueous dispersion containing the obtained polymer by means of a disc turbine impeller at a predetermined number of revolutions, an agglomerate of the fluorinated polymer can be recovered without using an agglomerating agent. An agglomerating agent, an emulsifier and the like having structures different from that of the fluorinated polymer have low decomposition temperatures and may serve as initiation sites for thermal decomposition. By suppressing remaining of such components and by suppressing bleeding-out of these components to the material surface, the roll windability can be improved. By using no emulsifier or agglomerating agent in the production process, no emulsifier or agglomerating agent remains in the fluorinated polymer, and thus the fluorinated polymer has a high decomposition temperature and improved roll windability.

Now, each step in the production method according to the present embodiment will be described.

### <Step 1>

In the production method according to the present embodiment, as step 1, the above-described specific monomers are polymerized in the first aqueous dispersion.

The first aqueous dispersion used in step 1 of the present embodiment is the same as the first aqueous dispersion used in step 1 of the first embodiment.

The specific method and the preferred embodiment of step 1 of the present embodiment are the same as the specific method and the preferred embodiment of step 1 described in the first embodiment.

According to step 1 of the present embodiment, the second aqueous dispersion containing the second fluorinated polymer is obtained.

The second fluorinated polymer and the second aqueous dispersion obtained in step 1 of the present embodiment, including the preferred embodiments, are the same as the second fluorinated polymer and the second aqueous dispersion in the first embodiment.

### <Step 2>

In step 2, the second aqueous dispersion containing the second fluorinated polymer obtained in step 1 is subjected to a stirring treatment of stirring the dispersion by means of a disc turbine impeller at a number of revolutions of 1000 rpm or more to agglomerate the second fluorinated polymer, thereby to obtain the agglomerated second fluorinated polymer.

The stirring treatment in step 2 of the present embodiment, including the preferred embodiment, is the same as the stirring treatment in step 2 of the first embodiment except that a stirring apparatus provided with a disc turbine impeller is used and that the number of revolutions of the disc turbine impeller is 1000 rpm or more.

By the above stirring treatment, the second aqueous dispersion is separated into a solid containing the agglomerated second fluorinated polymer and a liquid component.

The liquid component is for example a dispersion that has a dispersoid that is stably dispersed in the aqueous medium. Among insoluble components (for example the specific particles) contained in the second aqueous dispersion, a dispersoid that is stably dispersed in the aqueous medium even after the stirring is included in the liquid component.

Further, the solid includes a precipitate and a float that are not dispersed in the aqueous medium after the stirring. The solid may, for example, be an agglomerate of the second fluorinated polymer.

The solid containing the second fluorinated polymer separated by the stirring treatment is recovered to obtain the fluorinated polymer containing the TFE units and the PAVE units.

The method of recovering the solid containing the second fluorinated polymer may be filtration or centrifugal separation and is preferably filtration.

### <Washing step>

The production method according to the present embodiment preferably further has step 3 of washing the recovered second fluorinated polymer.

By step 3, other components (for example the emulsifier, the monomer, the polymerization initiator, and reaction products thereof) attached to the second fluorinated polymer can be removed, and a crosslinked rubber article having desired physical properties is likely to be obtained.

Step 3 of the present embodiment including the preferred embodiment is the same as step 3 of the first embodiment.

By the above production method, a fluorinated polymer having a content of the PAVE units of 20 to 80 mol% to the total content of the TFE units and the PAVE units, having a high decomposition temperature and being excellent in the roll windability can be obtained.

The fluorinated polymer obtained by the production method according to the present embodiment and the preferred embodiment, and the second fluorinated polymer contained in the second aqueous dispersion and the preferred embodiment, may, for example, be a fluorinated polymer and the preferred embodiment, which is the fluorinated polymer according to the first embodiment, having a content of the PAVE units to the total content of the TFE units and the PAVE units of 20 to 80 mol%.

By using the fluorinated polymer obtained by the production method according to the present embodiment, the above requirement 1 regarding the 2% weight loss temperature of the fluorinated polymer and requirement 2 regarding the difference ΔTd between the 5% weight loss temperature and the 2% weight loss temperature of the fluorinated polymer are readily satisfied. More specifically, in the method for producing the present composition, for example, by adjusting the content of the fluorinated polymer in the first aqueous dispersion, the content of a low molecular weight component in the entire fluorinated polymer and the content of a high molecular weight component in the entire fluorinated polymer can be adjusted, and requirement 1 and requirement 2 can be preferably satisfied.

The fluorinated polymer obtained by the production method according to the present embodiment may be in the form of the solid composition.

The fluorinated polymer obtained by the production method according to the present embodiment may also be a fluorinated elastomer.

The solid composition and the fluorinated elastomer including the preferred embodiments are the same as the solid composition and the fluorinated elastomer described in the first embodiment.

The fluorinated polymer obtained by the production method according to the present embodiment is used preferably for production of a crosslinked rubber article.

The production method and application of the crosslinked rubber article, including the preferred embodiments, are the same as the production method and the application of the crosslinked rubber article described in the first embodiment.

### EXAMPLES

Now, the present invention will be described in further detail with reference to Examples. Ex. 1 to 3 are Examples of the present invention, and Ex. 4 to 5 are Comparative Examples. However, it should be understood that the present invention is by no means restricted thereto.

The average particle size of particles in the aqueous dispersion was measured by using the aqueous dispersion in each Ex. to be described below as a sample, by means of a dynamic light scattering particle size measuring apparatus (ELSZ manufactured by Otsuka Electronics Co., Ltd.).

### <Iodine content measuring method>

A solid composition comprising the fluorinated polymer was hot-pressed into a 300 µm sheet. The obtained sheet-shaped composition was subjected to fluorescent X-ray analysis by ZSX PrimusII (manufactured by Rigaku Corporation) to calculate the iodine content in the solid composition (the fluorinated polymer) by fundamental parameter method.

### <Method of quantitative determination of emulsifier contained in solid composition>

### (Preparation of measurement sample)

The solid composition obtained in each Ex. was freeze-ground by a freeze-grinding machine Freezer Mill 6775 (manufactured by SPEX) under the following conditions. When freeze-ground, the solid composition was preliminarily mixed with dibutylhydroxytoluene (BHT) in an amount corresponding to 10 mass% of the total mass of the solid content to obtain a ground powder. The freeze-grinding conditions were such that the solid composition: 3 g, BHT: 0.3 g, run time: 5 mins, rate: 15 cps, and cycle: 3.

5 mL of methanol was added to 0.25 g of the obtained ground powder, and the mixture was subjected to ultrasonic treatment at 50°C for 2 hours and then subjected to centrifugal separation (5000 rpm, 5 minutes) to precipitate the fluorinated polymer, and the resulting supernatant was taken as an extract. The obtained extract was subjected to LC/MS/MS measurement. With respect to the emulsifier having a fluorine atom and the hydrocarbon emulsifier in the extract, measurement was conducted using a liquid chromatograph mass spectrometer. The measurement equipment configuration and the LC-MS measurement conditions are shown in Table 1. Using aqueous solutions of the emulsifier having a fluorine atom and the hydrocarbon emulsifier each having a known concentration, aqueous solutions each at 5 or more contents were prepared, and LC/MS analysis was conducted on the aqueous solutions at the respective contents. The relation between the content and the area at the corresponding content was plotted to draw an analytical curve. Using the obtained analytical curve, the areas of the LC/MS chromatogram of the emulsifier having a fluorine atom and the hydrocarbon emulsifier in the extract were converted to the contents of the emulsifier having a fluorine atom and the hydrocarbon emulsifier.

**Table 1**

| LC unit | | |
|---|---|---|
| Apparatus | CTO-40C manufactured by Shimadzu Corporation | |
| Column | Shim-pack Velox SP-C18 2.7 µm, 150 mm × 2.1 mm | |
| Mobile phase | A 20mM CH₃COONH₄/H₂O | |
| | B CH₃OH | |
| | 0→0.5 min | A:B=80:20→A:B=75:25 Linear gradient |
| | 0.5→3.5 min | A:B=75:25→A:B=70:30 Linear gradient |
| | 3.5→5.0 min | A:B=70:30→A:B=40:60 Linear gradient |
| | 5.0→9.5 min | A:B=40:60→A:B=20:80 Linear gradient |
| | 9.5→10.0 min | A:B=20:80→A:B=2:98 Linear gradient |
| | 10.0→20.0 min | A:B=2:98 |
| | 20.0→20.1 min | A:B=2.0:98.0→A:B=80:20 Linear gradient |
| | 20.1→25.0 min | A:B=80:20 |
| Flow rate | 0.25 mL/min | |
| Column temperature | 40°C | |
| Sample injection amount | 2 µL | |

| MS unit | | |
|---|---|---|
| Apparatus | LCMS-8060NX manufactured by Shimadzu Corporation | |
| Measurement mode | MRM (Multiple Reaction Monitoring) | |
| | ESI (Electrospray ionization) | |
| Ionization method | Negative mode | |

The MRM measurement parameters are properly selected depending upon the structures of the emulsifier having a fluorine atom and the hydrocarbon emulsifier to be measured. The MRM parameters may be literature values or may be calculated by an LC-MS apparatus. Determination of the MRM parameters by an LC-MS apparatus are specifically as follows. Using an LC/MS apparatus (manufactured by Shimadzu Corporation, LCMS-8060NX), product ion search is selected, the molecular weights of the emulsifier having a fluorine atom and the hydrocarbon emulsifier to be measured are input, and precursor ion selection, precursor adjustment, voltage optimization, and product m/z optimization are performed. The calculated MRM measurement parameters are used. As an example, the MRM measurement parameters of the compounds (S2) and (S4) which are emulsifiers having a fluorine atom are shown in Tables. In the formulae (S2) and (S4), MS is a hydrogen atom, a metal element, NR4 (R is a hydrogen atom or a C₁₋₁₀ organic group, and the four R may be the same or different), imidazolium which may have a substituent, pyridinium which may have a substituent, or phosphonium which may have a substituent.

F-(CF2)n1-COOMS (S2)

F-(CF2)n2-SO3MS (S4)

wherein n1 is an integer of 3 to 17, and n2 is an integer of 4 to 12.

**Table 2**

| Compound | Number of carbon atoms | n= | Precursor | Product |
|---|---|---|---|---|
| Perfluorobutanoic acid | 4 | 3 | 213 | 169 |
| Perfluoropentanoic acid | 5 | 4 | 263 | 219 |
| Perfluorohexanoic acid | 6 | 5 | 313 | 269 |
| Perfluoroheptanoic acid | 7 | 6 | 363 | 319 |
| Perfluorooctanoic acid | 8 | 7 | 413 | 369 |
| Perfluorononanoic acid | 9 | 8 | 463 | 419 |
| Perfluorodecanoic acid | 10 | 9 | 513 | 469 |
| Perfluoroundecanoic acid | 11 | 10 | 563 | 519 |
| Perfluorododecanoic acid | 12 | 11 | 613 | 569 |
| Perfluorotridecanoic acid | 13 | 12 | 663 | 619 |
| Perfluorotetradecanoic acid | 14 | 13 | 713 | 669 |
| Perfluorohexadecanoic acid | 16 | 15 | 813 | 769 |
| Perfluorooctadecanoic acid | 18 | 17 | 913 | 869 |

**Table 3**

| Compound | Number of carbon atoms | n= | Precursor | Product |
|---|---|---|---|---|
| Perfluorobutanesufononic acid | 4 | 4 | 299 | 99 |
| Perfluoropentanesulfonic acid | 5 | 5 | 349 | 99 |
| Perfluorohexanesulfonic acid | 6 | 6 | 399 | 99 |
| Perfluoropentanesulfonic acid | 7 | 7 | 449 | 99 |
| Perfluorooctanesulfonic acid | 8 | 8 | 499 | 99 |
| Perfluorononanesulfonic acid | 9 | 9 | 549 | 99 |
| Perfluorodecanesulfonic acid | 10 | 10 | 599 | 99 |
| Perfluorododecanesulfonic acid | 12 | 12 | 699 | 99 |

### (Quantitative determination of emulsifier having fluorine atom and hydrocarbon emulsifier contained in solid composition)

Specifically, first, methanol standard solutions of the emulsifier having a fluorine atom and the hydrocarbon emulsifier, each having a known concentration of 1 to 180 ng/g, were prepared, each at 5 concentrations. From the respective sample concentrations and the integrated peak areas, by first-order approximation, a was obtained from the formula (A1-1). $A = a \times X$ (A1-1) A: peak area of emulsifier, X: concentration (ng/g) of emulsifier

The amount of the emulsifier contained in the extract was calculated from the formula (A1-2). a in the formula (A1-2) represents a obtained from the formula (A1-1). $XCm = ACm / a$ (A1-2)
XCm: content (ng/g) of emulsifier in extract
ACm: peak area of emulsifier in extract

The quantitative determination limit in this measurement is 1 ng/g.

The content (ZCm) of the emulsifier in the solid composition to the total mass of the solid composition was obtained from the following formula (A1-3). $ZCm = XCm \times ρ 1 \times La / W 1$ (A1-3)
ZCm: content of emulsifier contained in solid composition
ρ1: density of extraction solvent (methanol in each Ex.)
La: volume of extraction solvent (5 mL in each Ex.)
W1: mass of sample used for extraction (2.5 g of solid content in each Ex.)

### <Method of quantitative determination of formula (S1) and formula (S3) contained in solid composition>

The solid composition obtained in each Ex. was freeze-ground by a freeze-grinding machine Freezer Mill 6775 (manufactured by SPEX) under the following conditions. When freeze-ground, the solid composition was preliminarily mixed with dibutylhydroxytoluene (BHT) in an amount corresponding to 10 mass% of the total mass of the solid content to obtain a ground powder. The freeze-grinding conditions were such that the solid composition: 3 g, BHT: 0.3 g, run time: 5 mins, rate: 15 cps, and cycle: 3.

5 mL of methanol was added to 2.5 g of the obtained ground powder, and the mixture was subjected to ultrasonic treatment at 50°C for 2 hours and then subjected to centrifugal separation (5000 rpm, 5 minutes) to precipitate the fluorinated polymer, and the resulting supernatant was taken as an extract.

The obtained extract was subjected to LC/MS/MS measurement. With respect to the emulsifier having a fluorine atom in the extract, measurement was conducted using a liquid chromatograph mass spectrometer. The measurement equipment configuration and the LC/MS measurement conditions are as described above. Using aqueous solutions of the emulsifier having a fluorine atom having a known concentration, methanol solutions at 5 or more contents were prepared, and LC/MS analysis was conducted on the methanol solutions at the respective contents. The relation between the content and the area at the corresponding content was plotted to draw an analytical curve. Using the obtained analytical curve, the area of the LC/MS chromatogram of the emulsifier having a fluorine atom in the extract was converted to the content of the emulsifier having a fluorine atom.

With respect to the content of the compound represented by the formula (S1) contained in each extract, the contents of the compounds of the formula (S1) wherein n1=3 to 13 were obtained by conversion to a corresponding perfluorocarboxylic acid (formula (S2)) with the same number of carbon atoms. With respect to the content of the compound represented by the formula (S3) in the each extract, the contents of the compounds of the formula (S3) wherein n2=4 to 10 were obtained by conversion to a corresponding perfluorosulfonic acid (formula (S4)) with the same number of carbon atoms. The MRM parameters of the formula (S1) and the formula (S3) are as shown in Tables 4 and 5.

Specifically, first, methanol standard solutions of a perfluorocarboxylic acid and a perfluorosulfonic acid, each having a known concentration of 1 to 180 ng/g, were prepared, each at 5 concentrations. From the respective sample concentrations and the integrated peak areas, by first-order approximation, a and a' were obtained from the formula (A2-1) and the formula (A2-1'). $A = a \times X$ (A2-1) A: peak area of perfluorocarboxylic acid, X: concentration (ng/g) of perfluorocarboxylic acid $A ′ = a ′ \times X ′$ (A2-1') A': peak area of perfluorosulfonic acid, X': concentration (ng/g) of perfluorosulfonic acid

**Table 4**

| Compound represented by formula (S1) (value of n1 in formula (S1)) | Number of carbon atoms | Precursor ion | Product ion |
|---|---|---|---|
| 3 | 4 | 195 | 131 |
| 4 | 5 | 245 | 181 |
| 5 | 6 | 295 | 231 |
| 6 | 7 | 345 | 281 |
| 7 | 8 | 395 | 331 |
| 8 | 9 | 445 | 381 |
| 9 | 10 | 495 | 431 |
| 10 | 11 | 545 | 481 |
| 11 | 12 | 595 | 531 |
| 12 | 13 | 645 | 581 |
| 13 | 14 | 695 | 631 |

**Table 5**

| Compound represented by formula (S3) (value of n2 in formula (S3)) | Number of carbon atoms | Precursor ion | Product ion |
|---|---|---|---|
| 4 | 4 | 281 | 99 |
| 5 | 5 | 331 | 99 |
| 6 | 6 | 381 | 99 |
| 7 | 7 | 431 | 99 |
| 8 | 8 | 481 | 99 |
| 9 | 9 | 531 | 99 |
| 10 | 10 | 581 | 99 |

Specifically, first, by the above liquid chromatography mass spectroscope, peak areas of the compounds represented by the formula (S1) and the formula (S3) contained in each extract were measured.

The contents of the compound represented by the formula (S1) and the compound represented by the formula (S3) were calculated respectively from the formula (A2-2) and the formula (A2-2'). a in the formula (A2-2) represents a obtained from the formula (A2-1), and a' in the formula (A2-2') represents a' obtained from the formula (A2-1'). $XCm = ACm / a$ (A2-2)
XCm: content (ng/g) of compound represented by formula (S1) with number of carbon atoms (n+1) in extract
ACm: peak area of compound represented by formula (S1) with number of carbon atoms (n+1) in extract $XCm ′ = ACm ′ / a ′$ (A2-2')
XCm': content (ng/g) of compound represented by formula (S3) with number of carbon atoms n in extract
ACm': peak area of compound represented by formula (S3) with number of carbon atoms n in extract

The quantitative determination limit in this measurement is 1 ng/g.

The content (ZCm) of the compound of the formula (S1) in the solid to the total mass of the solid was obtained from the following formula (A2-3). $ZCm = XCm \times ρ 1 \times La / W 1$ (A2-3)
ZCm: content of compound represented by formula (S1) with number of carbon atoms (n+1) contained in solid
ρ1: density of extraction solvent (methanol in each Ex.)
La: volume of extraction solvent (5 mL in each Ex.)
W1: mass of sample used for extraction (2.5 g of solid content in each Ex.)

The content (ZCm') of the compound of the formula (S3) in the solid to the total mass of the solid was obtained from the following formula (A2-4). $ZCm ′ = XCm ′ \times ρ 1 \times La / W 1$ (A2-4)
ZCm': content of compound represented by formula (S3) with number of carbon atoms n contained in solid
ρ1: density of extraction solvent (methanol in each Ex.)
La: volume of extraction solvent (5 mL in each Ex.)
W1: mass of sample used for extraction (2.5 g of solid content in each Ex.)

### <Production of material dispersion A>

In a stainless steel pressure resistant reactor having an internal capacity of 2.2 L, equipped with an anchor impeller, ultrapure water (1130 g), a 30 mass% aqueous ammonia solution (30 mg), PMVE (72 g) and TFE (14 g) were charged and heated to 90°C with stirring at 600 rpm. Then, an aqueous ammonium persulfate solution (5.0 mass%, 30 mL) was added to initiate polymerization. Since the pressure in the reactor decreased as the polymerization started, TFE was added to keep a constant pressure. When the amount of TFE injected reached 4 g, the reactor was cooled to terminate the polymerization. Gas remaining in the reactor was recovered, and liquid was withdrawn. This liquid was taken as material dispersion A.

The material dispersion A was freeze-agglomerated and subjected to filtration, and the obtained fluorinated polymer 1-1 (first fluorinated polymer) was analyzed by NMR and as a result, PMVE units/ TFE units=34/66 (molar ratio).

### <Production of material dispersion B>

To the material dispersion A, HPR4002Cl (manufactured by DuPont, anion exchange resin, 200 g) was added. 150 minutes after start of stirring, the mixture was subjected to filtration to separate the material dispersion from the ion exchange resin. To the obtained filtrate, AmberLite (registered trademark) HPR650H (manufactured by DuPont, cation exchange resin, 50 g) was added. 60 minutes after start of stirring, the mixture was subjected to filtration to separate the material dispersion from the ion exchange resin to obtain material dispersion B. The material dispersion B had particles of fluorinated polymer 1-1 dispersed in the aqueous medium, and had a content of the fluorinated polymer 1-1 of 0.6 mass% to the total mass of the material dispersion B.

### <Ex. 1>

Into a stainless steel pressure resistant reactor having an internal capacity of 2.2 L, equipped with an anchor impeller, the material dispersion B (1000 g) and ultrapure water (175 g) were charged to obtain aqueous dispersion B (first aqueous dispersion). The content of the fluorinated polymer 1-1 was 0.5 mass% to the total mass of the aqueous dispersion B. To the aqueous dispersion B, perfluoro-1,4-diiodobutane (2.0 g), PMVE (72 g) and TFE (14 g) were charged and heated to 80°C with stirring at 600 rpm. TFE and PMVE were injected in a molar ratio of 25/75 until the pressure in the reactor reached 1.2 MPa [gauge], and an aqueous ammonium persulfate solution (aqueous APS solution, 1.0 mass%, 20 mL, ammonium persulfate: 0.2 g) was added to initiate polymerization. Since the pressure in the reactor decreased as the polymerization started, TFE was added to keep a constant pressure. When the amount of TFE injected reached 160 g and the amount of PMVE injected reached 133 g, the reactor was cooled to terminate the polymerization to obtain fluorinated polymer 1-2 (second fluorinated polymer). The polymerization time was 300 minutes.

The aqueous dispersion B contained substantially no water-soluble emulsifier. Specifically, the contents of emulsifier A to be described below and compounds represented by the formulae (S1) to (S4) were measured by the following method. In production of the aqueous dispersion B, an emulsifier other than the emulsifier A and the compounds represented by the formulae (S1) to (S4) was not formed from the components used for production of the aqueous dispersion B nor used, and thus not contained in the aqueous dispersion B.

The solid content of the aqueous dispersion B was measured, and the aqueous dispersion B in an amount corresponding to 0.05 g of the solid was weighed in a 100 mL screw-cap tube. Then, to the weighed aqueous dispersion B, water and methanol were added so that 40 g of water/methanol=50/50 vol%. Then, the mixture was well shaken until agglomeration. The solid was removed, and liquid phase was subjected to centrifugal separation at 4000 rpm for 1 hour, and supernatant was collected as an extract. Measurement was conducted in the same manner as the above method of measuring the content of the emulsifier except for the sample preparation, and as a result, the contents of the compounds represented by the formulae (S1) to (S4) were the quantitative determination limit or less to the aqueous dispersion B.

Gas remaining in the reactor after the completion of the polymerization was recovered, and liquid was withdrawn from the reactor. This liquid was taken as aqueous dispersion 1. The aqueous dispersion 1 was a dispersion that had particles (average particle size: 92.7 nm) containing fluorinated polymer 1-2 dispersed in the aqueous medium and had a solid concentration of 20.5 mass%.

The aqueous dispersion 1 was stirred by a disc turbine impeller for 150 minutes at 1000 rpm, and agglomerate was collected by filtration and recovered. The recovered agglomerate was washed with 2000 g of ultrapure water at 40°C and dried to obtain rubber-like fluorinated polymer 1.

The obtained fluorinated polymer 1 was analyzed by NMR and as a result, the content of the TFE units was 66 mol% to the total content of all units of the fluorinated polymer 1, and the content of the PAVE units (PMVE units) was 34 mol% to the total content of all units of the fluorinated polymer 1.

The fluorinated polymer 1 was measured by the above measurement method and as a result found to have an iodine content of 0.2 mass%.

### <Production of material dispersion C>

Fluorinated polymer 2-1 (first fluorinated polymer) was produced by polymerization in the same manner as the production of the material dispersion A except that the amount of the monomer components were properly changed, and the obtained liquid was taken as material dispersion C. The material dispersion C was freezeagglomerated and subjected to filtration, and the obtained fluorinated polymer 2-1 was analyzed by NMR and as a result, PMVE units/TFE units=32/68 (molar ratio).

### <Production of material dispersion D>

Material dispersion D was produced in the same manner as the method for producing the material dispersion B except that the material dispersion C was used instead of the material dispersion A. The material dispersion D had particles of the fluorinated polymer 2-1 dispersed in the aqueous medium, and had a content of the fluorinated polymer 2-1 of 0.6 mass% to the total mass of the material dispersion D.

### <Ex. 2>

Into a stainless steel pressure resistant reactor having an internal capacity of 2.2 L, equipped with an anchor impeller, the material dispersion D (1000 g) and ultrapure water (175 g) were charged to obtain aqueous dispersion D (first aqueous dispersion). The content of the fluorinated polymer 2-1 was 0.5 mass% to the total mass of the aqueous dispersion D. To the aqueous dispersion D, PMVE (90 g), perfluoro-1,4-diiodobutane (2.0 g) and TFE (18 g) were charged and heated to 80°C with stirring at 600 rpm. When the internal temperature reached 80°C, the pressure was 1.5 MPa [Gauge]. An aqueous APS solution (0.5 mass%, 16 mL, ammonium persulfate: 0.08 g) was added to initiate polymerization. Since the pressure in the reactor decreased as the polymerization started, TFE and PMVE in a molar ratio of 65/35 were added to keep a constant pressure. When the amount of TFE injected reached 256 g and the amount of PMVE injected reached 217 g, the reactor was cooled to terminate the polymerization to obtain fluorinated polymer 2-2 (second fluorinated polymer). The polymerization time was 290 minutes. The aqueous dispersion D contained substantially no water-soluble emulsifier. The content of the emulsifier was confirmed in the same manner as for the aqueous dispersion B.

Gas remaining in the reactor was recovered, and liquid was withdraw. This liquid was taken as aqueous dispersion 2. The aqueous dispersion 2 was a dispersion that had particles (average particle size: 140.3 nm) containing the fluorinated polymer 2-2 dispersed in the aqueous medium and had a solid concentration of 28.6 mass%.

The aqueous dispersion 2 was stirred by a disc turbine impeller for 150 minutes at 1000 rpm, and agglomerate was collected by filtration and recovered. The recovered agglomerate was washed with 2000 g of ultrapure water at 25°C and dried to obtain rubber-like fluorinated polymer 2.

The obtained fluorinated polymer 2 was analyzed by NMR and as a result, the content of the TFE units was 68 mol% to the total content of all units of the fluorinated polymer 2, and the content of the PAVE units (PMVE units) was 32 mol% to the total content of all units of the fluorinated polymer 2.

The fluorinated polymer 2 was measured by the above measurement method and as a result found to have an iodine content of 0.05 mass%.

### <Ex. 3>

Into a stainless steel pressure resistant reactor having an internal capacity of 2.2 L, equipped with an anchor impeller, the material dispersion D (1000 g) and ultrapure water (175 g) were charged to obtain aqueous dispersion D (first aqueous dispersion). The content of the fluorinated polymer 3-2 was 0.5 mass% to the total mass of the aqueous dispersion D. To the aqueous dispersion D, PMVE (72 g) and TFE (14 g) were charged and heated to 80°C with stirring at 600 rpm. TFE and PMVE were injected until the pressure in the reactor reached 1.5 MPa [Gauge], and an aqueous APS solution (0.5 mass%, 16 mL, ammonium persulfate: 0.08 g) was added to initiate polymerization. Since the pressure in the reactor decreased as the polymerization started, TFE was added to keep a constant pressure. When the amount of TFE added reached 6 g, perfluoro-1,4-diiodobutane (2.0 g) was injected. When the amount of TFE injected reached 256 g and the amount of PMVE injected reached 217 g, the reactor was cooled to terminate the polymerization to obtain fluorinated polymer 3-2 (second fluorinated polymer). The polymerization time was 290 minutes. The aqueous dispersion D contained substantially no water-soluble emulsifier. The content of the emulsifier was confirmed in the same manner as for the aqueous dispersion B.

Gas remaining in the reactor was recovered, and liquid was withdrawn. This liquid was taken as aqueous dispersion 3. The aqueous dispersion 3 was a dispersion that had particles (average particle size: 96 nm) containing fluorinated polymer 3-2 dispersed in the aqueous medium and had a solid concentration of 27.6 mass%.

The aqueous dispersion 3 was stirred by a disc turbine impeller for 150 minutes at 1000 rpm, and agglomerate was collected by filtration and recovered. The recovered agglomerate was washed with 2000 g of ultrapure water at 40°C and dried to obtain rubber-like fluorinated polymer 3.

The obtained fluorinated polymer 3 was analyzed by NMR and as a result, the content of the TFE units was 65 mol% to the total content of all units of the fluorinated polymer 3, and the content of the PAVE units (PMVE units) was 35 mol% to the total content of all units of the fluorinated polymer 3.

The fluorinated polymer 3 was measured by the above measurement method and as a result found to have an iodine content of 0.05 mass%.

### <Ex. 4>

A stainless steel pressure resistant reactor having an internal capacity of 2.2 L, equipped with an anchor impeller, was deaerated, and ultrapure water (980 g), a 30 mass% C₂F₅OCF₂CF₂OCF₂COONH₄ (emulsifier A) solution (201.7 g) as the emulsifier, and a 5 mass% aqueous disodium hydrogen phosphate dodecahydrate solution (2.3 g) were charged and gas phase was replaced with nitrogen. While stirring by an anchor impeller at 600 rpm, PMVE (72 g) and TFE (14 g) were injected into the reactor and the internal temperature was increased to 80°C. Then, an aqueous APS solution (0.5 mass%, 16 mL, ammonium persulfate: 0.08 g) was added to initiate polymerization. Since the pressure in the reactor decreased as the polymerization started, TFE and PMVE in a molar ratio of 65/35 were added to keep a constant pressure of 1.2 MPa [gauge]. When the amount of TFE injected reached 160 g and the amount of PMVE injected reached 133 g, the reactor was cooled to terminate the polymerization to obtain fluorinated polymer 4a. The polymerization time was 262 minutes.

Gas remaining in the container was recovered, and liquid was withdrawn. This liquid was taken as aqueous dispersion 4. The aqueous dispersion 4 was a dispersion that had particles (average particle size: 80 nm) containing fluorinated polymer 4a dispersed in the aqueous medium, and had a solid concentration of 23.2 mass%.

While the aqueous dispersion 4 was stirred, an aqueous aluminum sulfate solution (5%, 2000 g) was added, and the agglomerate was collected by filtration and recovered. The recovered agglomerate was washed with 2000 g of ultrapure water at 40°C and dried to obtain rubber-like fluorinated polymer 4.

The obtained fluorinated polymer 4 was analyzed by NMR and as a result, the content of the TFE units was 65 mol% to the total content of all units of the fluorinated polymer 4, and the content of the PAVE units (PMVE units) was 35 mol% to the total content of all units of the fluorinated polymer 4.

The fluorinated polymer 4 was measured by the above measurement method and as a result had an iodine content of 0.05 mass%.

### <Ex. 5>

A stainless steel pressure resistant reactor having an internal capacity of 2.2 L, equipped with an anchor impeller, was deaerated, and ultrapure water (980 g), a 30 mass% C₂F₅OCF₂CF₂OCF₂COONH₄ (emulsifier A) solution (201.7 g) as the emulsifier, and a 5 mass% aqueous disodium hydrogen phosphate dodecahydrate solution (2.3 g) were charged, and gas phase was replaced with nitrogen. While stirring by an anchor impeller at 600 rpm, PMVE (54 g) and TFE (11 g) were injected to the reactor and the internal temperature was increased to 80°C. Then, an aqueous APS solution (0.5 mass%, 13 mL, ammonium persulfate: 0.06 g) was added to initiate polymerization. Since the pressure in the reactor decreased as the polymerization started, TFE and PMVE in a molar ratio of 65/35 were added to keep a constant pressure of 0.9 MPa [gauge]. When the amount of TFE injected reached 6 g, perfluoro-1,4-diiodobutane (2.0 g) was injected. When the amount of TFE injected reached 410 g and the amount of PMVE injected reached 280 g, the reactor was cooled to terminate the polymerization to obtain fluorinated polymer 5a. The polymerization time was 500 minutes.

Gas remaining in the reactor was recovered, and liquid was withdrawn. This liquid was taken as aqueous dispersion 5. The aqueous dispersion 5 was a dispersion that had particles (average particle size: 80 nm) containing fluorinated polymer 5a dispersed in the aqueous medium and had a solid concentration of 38.8 mass%.

The aqueous dispersion 5 was added to 2500 g of a 3 mass% aqueous nitric acid solution and the mixed liquid was stirred, and the agglomerate was collected by filtration and recovered. The recovered agglomerate was washed with 2000 g of ultrapure water at 23°C and dried to obtain rubber-like fluorinated polymer 5.

The obtained fluorinated polymer 5 was analyzed by NMR and as a result, the content of the TFE units was 65 mol% to the total content of all units of the fluorinated polymer 5, and the content of the PAVE units (PMVE units) was 35 mol% to the total content of all units of the fluorinated polymer 5.

The fluorinated polymer 5 was measured by the above measurement method and as a result had an iodine content of 0.03 mass%.

### [Measurement and evaluation methods]

Various measurement methods and evaluation methos are as follows.

### <2% weight loss temperature and 5% weight loss temperature>

10 mg of the fluorinated polymer obtained in each Ex. was weighed as a sample and put in an aluminum pan. While the sample was heated in an air atmosphere at a heating rate of 10°C/min from 30°C to 550°C, the mass change of the sample was measured. The temperature at which the mass of the sample became 98 mass% based on the mass of the sample before heating being 100 mass%, was taken as the 2% mass reduction temperature. Likewise, the temperature at which the mass of the sample became 95 mass% was taken as the 5% mass reduction temperature.

The above thermogravimetric analysis was conducted by using a differential thermogravimetric measuring apparatus "NEXTA STA series STA200" (manufactured by Hitachi High-Tech Corporation).

From the measurement results of the thermogravimetric analysis, a thermogravimetric curve (TGA curve) showing the relation between the temperature and the weight (mass) of the sample was prepared, and the TGA curve was differentiated with respect to temperature to obtain a derivative TGA curve. From the peak temperature of the peak which appeared in the derivative TGA curve, the inflection point temperature (°C) at which the inflection point appeared in the TGA curve of each sample was obtained.

In the following Table 6, the 2% weight loss temperature, the 5% weight loss temperature and the inflection point temperature of the sample in each Ex. are shown. In a case where a plurality of peaks appeared in the derivative TGA curve and a plurality of inflection points appeared in the TGA curve, only the inflection point temperature of the inflection point at the lowest temperature is shown in Table 6.

### <Storage elastic modulus>

As a measurement apparatus, a rubber processability analyzer "PREMIER RPA (manufactured by ALPHA TECHNOLOGIES, die shape: D0380)" was used.

The fluorinated polymer obtained in each Ex. was kneaded by a two-roll mill at room temperature for 10 minutes to prepare a sheet having a thickness of 3 mm. The sheet thickness was controlled by adjusting the gap of the two rolls.

The obtained sheet was cut so that the weight would be about 10 g to obtain a cut sheet. The cut sheet was sandwiched between two polyester films (ALFA Technologies PART#F0311-S, 130 mm × 130 mm × 24 µm) to obtain a measurement sample. The sample was placed on a die of the measurement apparatus. The die temperature was preliminarily set to 100°C.

The sample was held at 100°C at a frequency of 30 cpm at an amplitude angle of 0.2 deg for 2 minutes, and then the amplitude angle was set to 0.5 deg and the frequency was increased to 10 cpm, 20 cpm, and 50 cpm to measure the storage elastic modulus. The storage elastic modulus at a frequency of 50 cpm at 100°C was taken as the storage elastic modulus G' (unit: kPa) of the sample.

### <Thermal decomposition temperature>

Using the same apparatus as for the above thermogravimetric analysis, the thermal decomposition temperature of the fluorinated polymer was measured.

10 mg of the fluorinated polymer obtained in each Ex. was weighed as a sample and put in an aluminum pan. While the sample was heated in an air atmosphere at a heating rate of 10°C/min from 30°C to 550°C, the temperature difference ΔT with the reference was detected as DTA signals, and the temperature at which the DTA signal became maximum was taken as the decomposition temperature DTA (unit: °C). As a reference, an empty aluminum pan was used.

### <Roll windability>

The fluorinated polymer obtained in each Ex. was kneaded by a roll kneading machine (manufactured by Yamatetsu Machinery Inc., Test Rolling Machine) to prepare a sheet, thereby to confirm the roll windability.

The roll kneading machine had two rolls (roll diameter: 8 inches, roll length: 18 inches), and two guide members provided over the gap between the rolls and in the vicinity of both ends of the rolls. By the guide members, the width of the polymer to be processed, which tended to extend in the roll axis direction after passing through the rolls, was maintained at a predetermined width.

200 g of the fluorinated polymer was weighed and heated to 50°C in a drier, and put between the guide members of the roll kneading machine set to the following conditions. The time from the introduction of the fluorinated polymer until the fluorinated polymer (bank) remaining in the roll gap between the guide members disappeared and the entire fluorinated polymer was wound onto the roll ("winding time") was measured.
· roll temperature: 40°C
· roll gap: 4.2 mm
· number of revolutions of front roll: 22 rpm
· number of revolutions of rear roll: 20 rpm
· width between guide members: 150 mm

The roll temperature was adjusted by a water warmer (WTC40, manufactured by NAKAMURA KAGAKUKOGYO CO.,LTD.).

The roll windability of the fluorinated polymer was evaluated from the measurement time in accordance with the following evaluation standards.

### (Roll windability evaluation standard)

○: winding time being within 3 minutes
△: winding time being more than 3 minutes and within 5 minutes
×: not entire fluorinated polymer being wound onto the roll, or winding time being more than 5 minutes

**Table 6**

| | | Ex. 1 | Ex. 2 | Ex. 3 | Ex. 4 | Ex. 5 |
|---|---|---|---|---|---|---|
| Agglomeration method | | Disc turbine | Disc turbine | Disc turbine | Aluminum sulfate | Nitric acid |
| 2% weight loss temperature | °C | 386 | 410 | 409 | 420 | 430 |
| 5% weight loss temperature | °C | 440 | 436 | 438 | 422 | 447 |
| Δ T | °C | 54 | 26 | 29 | 2 | 17 |
| Inflection point temperature | °C | 335 | 295 | 299 | 453 | 490 |
| G' (100°C) | kPa | 363 | 384 | 473 | 476 | 741 |
| Decomposition temperature | °C | 485 | 475 | 475 | 475 | 485 |
| Roll windability | | ○ | ○ | ○ | Δ | × |
| Content of emulsifier A | ppb | 0 | 0 | 0 | >150 | >150 |
| Content of formula (S1) | ppb | 6 | 22 | 8 | 12 | 9 |
| Content of formula (S2) | ppb | 0 | 0 | 0 | 0 | 0 |
| Content of formula (S3) | ppb | 0 | 0 | 0 | 0 | 0 |
| Content of formula (S4) | ppb | 0 | 0 | 0 | 0 | 0 |

It was confirmed from the evaluation results in Ex. 1 to 3 that the fluorinated polymer of the present invention, wherein the 2% weight loss temperature is 300°C or higher and less than 420°C (requirement 1) and the difference between the 5% weight loss temperature and the 2% weight loss temperature is 20°C or more (requirement 2), has a high decomposition temperature and is excellent in the roll windability.

Whereas the fluorinated polymers in Ex. 4 and 5, which do not satisfy requirement 1 and requirement 2, were confirmed to be inferior in the roll windability.

The entire disclosure of Japanese Patent Application No. 2023-222267 filed on December 28, 2023 including specification, Claims and summary is incorporated herein by reference in its entirety.

## Claims

1. A fluorinated polymer, which satisfies requirement 1 and requirement 2:
requirement 1: the 2% weight loss temperature of the fluorinated polymer is 300°C or higher and less than 420°C;
requirement 2: the difference between the 5% weight loss temperature of the fluorinated polymer and the 2% weight loss temperature of the fluorinated polymer is 20°C or more.

2. The fluorinated polymer according to Claim 1, which has units based on tetrafluoroethylene and units based on a perfluoro(alkyl vinyl ether).

3. The fluorinated polymer according to Claim 1 or 2, wherein the storage elastic modulus G' at 100°C at a frequency of 50 cpm is 300 kPa or more.

4. The fluorinated polymer according to Claim 1 or 2, wherein in a thermogravimetric curve obtained by thermogravimetric analysis of the fluorinated polymer, an inflection point appears in a temperature range lower than the 5% weight loss temperature.

5. The fluorinated polymer according to Claim 2, wherein the content of the units based on the tetrafluoroethylene is 20 to 80 mol% to the total content of all units of the fluorinated polymer, and
the content of the units based on the perfluoro(alkyl vinyl ether) is 20 to 80 mol% to the total content of all units of the fluorinated polymer.

6. The fluorinated polymer according to Claim 1 or 2, wherein the fluorinated polymer contains at least one member selected from the group consisting of a polymerizable unsaturated bond, a chlorine atom, a bromine atom, an iodine atom and a nitrile group.

7. A method for producing a fluorinated polymer, which comprises polymerizing monomers containing tetrafluoroethylene and a perfluoro(alkyl vinyl ether), in an aqueous dispersion that contains substantially no water-soluble emulsifier, that contains a first fluorinated polymer containing units based on tetrafluoroethylene and units based on a perfluoro(alkyl vinyl ether), and that contains an aqueous medium, to produce a second fluorinated polymer having units based on the tetrafluoroethylene and units based on the perfluoro(alkyl vinyl ether); wherein
in the first fluorinated polymer, the content of the units based on the perfluoro(alkyl vinyl ether) is 20 to 80 mol% to the total contents of the units based on the tetrafluoroethylene and the units based on the perfluoro(alkyl vinyl ether),
in the second fluorinated polymer, the content of the units based on the perfluoro(alkyl vinyl ether) is 20 to 80 mol% to the total contents of the units based on the tetrafluoroethylene and the units based on the perfluoro(alkyl vinyl ether);
before the start of the polymerization of the monomers, the content of the first fluorinated polymer is 0.01 to 4.0 mass% to the total mass of the aqueous dispersion; and
after the polymerization of the monomers in the aqueous dispersion, the aqueous dispersion is stirred by a stirring apparatus configured to rotate a stirring shaft provided with an impeller at a number of revolutions of 1000 rpm or more, to agglomerate the second fluorinated polymer and the agglomerated second fluorinated polymer is recovered.

8. The method for producing the fluorinated polymer according to Claim 7, wherein the recovered second fluorinated polymer is washed with ultrapure water.

9. A sheet, which comprises the fluorinated polymer as defined in Claim 1 or 2.
